# EUROPEAN PATENT SPECIFICATION

(11) **EP 1 964 856 B1**
(45) Date of publication and mention of the grant of the patent: **25.05.2011**
(21) Application number: 06833978.7
(22) Date of filing: 05.12.2006
(51) Int. Cl.: C08F 2/44, C08F 291/00, C08L 51/00, C08L 101/00, G02B 5/02

(54) **POLYMER PARTICLES, PROCESS FOR PRODUCTION THEREOF, RESIN COMPOSITIONS CONTAINING THE PARTICLES, AND MOLDINGS**
POLYMERTEILCHEN, HERSTLLUNGSVERFAHREN DAFÜR, HARZZUSAMMENSETZUNGEN, DIE DIE TEILCHEN ENTHALTEN, UND FORMKÖRPER
PARTICULES DE POLYMÈRE, PROCÉDÉ POUR LA PRODUCTION DE CELLES-CI, COMPOSITIONS DE RÉSINE CONTENANT LES PARTICULES ET MOULAGES DES COMPOSITIONS

(30) Priority: 12.12.2005 JP 2005357203; 13.02.2006 JP 2006034893; 13.02.2006 JP 2006034894
(43) Date of publication of application: 03.09.2008
(73) Proprietor: Kaneka Corporation, Osaka-shi, Osaka 530-8288 (JP)
(72) Inventor: KITAYAMA, Fuminobu, Hyogo 655-0034 (JP); SUGAYA, Takahiko, Hyogo 676-0026 (JP)
(74) Representative: Vossius & Partner
(86) International application number: PCT/JP2006/324223
(87) International publication number: WO 2007/069493

(56) References cited:
- GB-A- 1 299 268
- JP-A- 01 069 604
- JP-A- 04 337 304
- JP-A- 09 227 609
- JP-A- 10 120 714
- JP-A- 57 036 101
- JP-A- 60 203 619
- JP-A- 2002 293 809
- US-A1- 2003 018 127
- DATABASE WPI Week 198216 Thomson Scientific, London, GB; AN 1982-31712E XP002529474 -& JP 57 042702 A (MITSUBISHI RAYON CO LTD) 10 March 1982 (1982-03-10)
- DATABASE WPI Week 198615 Thomson Scientific, London, GB; AN 1986-098063 XP002529475 -& JP 61 043609 A (MITSUI TOATSU CHEM INC) 3 March 1986 (1986-03-03)
- DATABASE WPI Week 198615 Thomson Scientific, London, GB; AN 1986-098064 XP002529476 -& JP 61 043610 A (MITSUI TOATSU CHEM INC) 3 March 1986 (1986-03-03)

## Description

The present invention relates to a light diffusion plate consisting of a molded product of a resin composition comprising polymer particles.

In recent years, fine particles having a particle size of approximately 1 to 50 µm have attracted attention in broad fields, and have been required for a variety of applications. For example, expanded applications as resin modifiers; light diffusing agents or matte agents in fields of coating or various displays; lubricating agents in cosmetic fields; materials for toners in electronic copying machinery fields have been suggested. Applications of the particles in micron size orders are expected to be increasingly enlarged hereafter.

For example, the light diffusing agent refers to inorganic or organic fine particles which are dispersed in a transparent resin for achieving light diffusibility in projection televisions, liquid crystal display devices, illumination covers and the like, and which have a different refractive index from the transparent resin.

Meanwhile, the matte agent refers to inorganic or organic fine particles which are dispersed in a resin such as an acrylic resin, a vinyl chloride resin or an ABS resin, when a glossy molded article obtained from the resin is used in applications in which the gloss is unnecessary or the absence of the gloss is rather preferred.

The inorganic fine particles which may be used in such applications may involve inorganic fine particles having a mean particle diameter of no greater than 10 µm such as barium sulfate, calcium carbonate or quartz, and the like. Furthermore, as alternatives of such inorganic fine particles, high-molecular weight fine particles produced by copolymerizing styrene or substituted styrene with a polyfunctional monomer, and the like have been also used (see, for example, Patent Document 1).

However, in general, when the conventionally used inorganic or organic fine particles described above are dispersed in a resin, the impact strength of the resulting molded product may be lowered. Thus, such fine particles involved problems of availability in limited applications.

In contrast, in order to suppress the lowering of physical strength of the high-molecular weight fine particles when they are dispersed in a substrate resin, high-molecular weight fine particles including core/outer shell polymers, are disclosed which is characterized in that the core includes a rubber alkyl acrylate having an alkyl group having 2 to 8 carbon atoms, and the outer shell is miscible with the matrix polymer and is present in the particle in an amount of about 5 to 40% by weight (see, for example, Patent Document 2).

In an example of use in applications in which the high-molecular weight fine particles necessitate light diffusibility, a light diffusing agent in which a methacryl resin is used as a substrate resin (transparent resin), and high-molecular weight fine particles having an outermost layer including an acrylic polymer formed thereon is disclosed. In this case, the acrylic polymer is generally excellent in optical characteristics, and affinity with the methacryl resin is also favorable, therefore, it is expected that a light diffusible resin composition having superior characteristics can be obtained.

Additionally, a light diffusion plate which achieves both excellent light diffusibility and excellent light transmittivity, and which has a favorable appearance by use of light diffusible high-molecular weight fine particles being substantially spherical, having a mean particle size of 3 to 20 µm, having a CV value of the particle size distribution of no greater than 20%, and including particles having a particle size of the mean particle size ±10% accounting for equal to or more than 75% by weight of the polymer particles is disclosed (for example, see Patent Document 3).

As a method suited for production of the aforementioned high-molecular weight fine particles, a method of producing a polymer latex is disclosed which includes: first dividing a monomer or a monomer mixture into a monomer for initial addition and a monomer for dropwise addition; then adding batchwise the monomer for initial addition to a buffer-containing aqueous medium to which a persulfate initiator is added; thereafter keeping for a specified time to form a seed particle; subsequently adding the persulfate initiator again to this polymerization system, immediately followed by adding dropwise the monomer for dropwise addition over a specified time; and keeping for a specified time (for example, see Patent Document 4).

Moreover, as a method of efficiently producing micron-size polymer particles having a comparatively uniform particle size distribution by a simple operation, a method is disclosed which includes: preparing an O/W emulsion by mixing a solution containing a polymerizable monomer, a material insoluble in water having a solubility in water at 20°C of no more than 0.05% by weight and having a molecular weight of no higher than 20,000, and a polymerization initiator having a solubility in water at 20°C of no more than 0.05% by weight, with a solution containing an emulsifying agent and/or a water soluble polymer compound, and water, followed by subjecting the mixture to mechanical shearing; and then permitting polymerization to produce polymer particles having a volume mean particle size of about 2 to 20 µm (see, for example, Patent Document 5).

Then, the latex of high-molecular weight fine particles as described above is usually recovered as aggregates of the high-molecular weight fine particles by a process of recovery through dehydration and drying following completing the polymerization, a process of allowing the polymer latex to aggregate through adding an acid or a salt followed by dehydration and drying of the resulting slurry, or a spray drying process.

However, according to the aforementioned recovery process, the resulting high-molecular weight fine particle aggregate usually has a volume mean particle size of less than 100 µm, and thus powder characteristics of the product are often inferior since it includes a lot of fine powders. Therefore, problems of inferior handleability, severe dusting, deterioration of the working environment, or risk of dust explosion, and the like may be caused.

On the other hand, in order to solve the problems described above, it is disclosed that acrylic fine particles constituted with at least one inner layer including an acrylic polymer having a glass transition temperature (hereinafter, also referred to as Tg) of no higher than 0°C, and an outermost layer including an acrylic polymer accounting for 1% by mass or more and 5% by mass or less in the entire particles and having Tg of no lower than 50°C, in which the aggregates of the acrylic fine particles have a volume mean particle size of 100 to 1,000 µm, can improve the powder characteristics, and favorable handleability and productivity can be accomplished (see, for example, Patent Document 6).

However, this process involves problems of difficulty in quality control due to great structural restriction of the high-molecular weight fine particles, and poor applicability of limited use only in a specific field. In addition, possibility of aggregation to no smaller than 1,000 µm in such processes is not referred to.
Patent Document 1: Japanese Unexamined Patent Application No. Sho 56-36535
Patent Document 2: Japanese Unexamined Patent Application No. 2000-53841
Patent Document 3: Japanese Unexamined Patent Application No. Hei 7-234304
Patent Document 4: Japanese Unexamined Patent Application No. Hei 8-198903
Patent Document 5: Japanese Unexamined Patent Application No. Hei 10-120715
Patent Document 6: Japanese Unexamined Patent Application No. 2001-294631

The present invention solves the foregoing prior art problems, and an object of the present invention is to provide a light diffusion plate comprising high-molecular weight polymer particles having favorable powder characteristics accompanied by less structural restriction. In particular, the light diffusion plate defined in the annexed claims uses a light diffusible resin composition which include high-molecular weight polymer particles having favorable powder characteristics, and which have favorable physical properties and are also excellent in handleability.

The present inventors elaborately investigated in order to produce polymer particles having favorable powder characteristics which can reduce structural restriction of high-molecular weight fine particles, and consequently found that high-molecular weight polymer particles having favorable powder characteristic can be obtained with less structural restriction by: mixing a latex of high-molecular weight fine particles, a polymerizable monomer, a polymerization initiator, a suspension dispersant and a coagulating agent; and subjecting the mixture to granulation and suspension polymerization, and that a light diffusible resin composition which has favorable physical properties and is excellent in handleability can be obtained by blending a substrate resin with such high-molecular weight polymer particles. Accordingly, the present invention was accomplished.

The polymer particles used in the context of the present invention are obtainable by granulation, and suspension polymerization from a system including a latex of polymer fine particles (A) having a volume mean particle size of 1 to 50 µm, a polymerizable monomer (B), a polymerization initiator, a suspension dispersant and a coagulating agent, in which the polymer particles are polymer particles (C) have a volume mean particle size of 100 to 6,000 µm, and include fine powders of no greater than 50 µm at a content of no higher than 15% by weight. Therefore, polymer fine particles which can impart excellent low glossiness and light diffusibility to a substrate resin (D) can be obtained since they are accompanied by less dusting and favorable handleability, and further can be readily dispersed in a size of the unit of the polymer fine particles (A).

Such polymer particles used in the context of the invention can be produced by a production method including: adding the polymerizable monomer (B), the polymerization initiator, the suspension dispersant and the coagulating agent in the presence of the latex of the polymer fine particles (A); and subjecting the mixture to the granulation and the suspension polymerization.

In other words, production of the polymer particles used in the context of the invention are exceptionally enabled by a method of producing polymer particles, in which the granulation is carried out by adding the polymerizable monomer (B), the polymerization initiator, the suspension dispersant and the coagulating agent in the presence of the latex of the polymer fine particles (A), and includes the steps of:
disrupting the emulsified state of the latex of the polymer fine particles (A); and
transferring the system to a suspension system with a volume mean particle size of 100 to 6,000 µm.

The method of producing polymer particles herein is preferably characterized by including producing the polymer fine particles (A) by a suspension polymerization process using an anionic emulsifying agent as a suspension dispersant, and thus the polymer fine particles (A) can be efficiently granulated without adverse effects on the granulation of the polymer particles (C).

It is preferred that the polymer particles (C) used in the context of the invention include the polymer fine particles (A) and the polymerizable monomer (B) in a compounding ratio falling within the range of 0.5:99.5 to 95:5 (weight ratio (A):(B)). Accordingly, physical properties derived from the high-molecular weight fine particles (A) can be exhibited, whereby favorable powder characteristics can be achieved.

Furthermore, when the light diffusion plate of the present invention needs to have characteristics such as impact resistance, it is particularly preferred that the polymer fine particles (A) be characterized by being (meth)acrylic acid alkyl ester based polymer fine particles, or polyorganosiloxane polymer fine particles, and having a glass transition temperature of the homopolymer thereof being no higher than 0°C.

Furthermore, the polymerizable monomer (B) is preferably one kind, or two or more kinds of monomers selected from (meth)acrylic acid alkyl ester based monomers, aromatic vinyl based monomers, vinyl cyanide based monomers, vinyl acetate monomers, and vinyl chloride monomers because of satisfactory affinity with the matrix resin.

The resin composition used in the light diffusion plate of the present invention is characterized by including the polymer particles (C) produced by the aforementioned method of producing polymer particles of the present invention, and a substrate resin (D), in which the substrate resin (D) is characterized by being at least one selected from the group consisting of a thermoplastic resin, a thermosetting resin, and an elastomer.

The resin composition is characterized by including 100 parts by weight of the substrate resin (D), and 0.1 to 500 parts by weight of the polymer particles (C) because satisfactory characteristics can be maintained without deterioration of the physical properties such as impact strength.

Additionally, the substrate resin (D) is at least one resin selected from the group consisting of a thermoplastic resin and a thermosetting resin.

Furthermore, the substrate resin (D) is a transparent resin which forms a molded product having a thickness of 3 mm with a total light transmittance of no less than 40%.

Also, a light diffusible resin composition is characterized in that the polymer particles (C) are light diffusible polymer fine particles.

The refractive index of the polymer fine particles (A) preferably falls within the range of 1.350 to 1.650.

Also, absolute value of the difference in the refractive indices of the polymer fine particles (A) and the substrate resin (D) preferably falls within the range of 0.001 to 0.3.

The molded product of such a light diffusible resin composition can be suitably used in applications in which light diffusibility and light transmittivity are required.

In particular, the light diffusion plate has a total light transmittance of no less than 10%, and a haze ratio of no less than 40%.

According to the method of producing polymer particles disclosed herein high-molecular weight fine particles having favorable powder characteristics accompanied by less structural restriction are obtained. Additionally, the resin composition containing the high-molecular weight fine particles is characterized by favorable physical properties, and excellent handleability. This resin composition can be suitably used as a light diffusible resin composition to be the material for light diffusible molded products that require light diffusibility, and transparency. Thus, the present invention provides the light diffusion plate as defined in the annexed claims.

Unless otherwise stated, (meth)acryl herein means acryl and/or methacryl.

### Polymer Particle (C)

The polymer particles (C) to be used in the light diffusion plate according to the present invention are produced by mixing a latex of the polymer fine particles (A) having a volume mean particle size of 1 to 50 µm, a polymerizable monomer (B), a polymerization initiator, a suspension dispersant and a coagulating agent, followed by granulation and suspension polymerization. In order to achieve favorable productivity and handleability of the product, the amount of the fine powder having a volume mean particle size of 100 to 6,000 µm, and no greater than 50 µm accounts for no more than 15% by weight of the total amount. Therefore, a resin composition that is excellent in handleability and allows molding processing, and coating to be performed through mixing with a substrate resin (D) can be provided. By performing the molding processing and coating, dispersion in a size of the unit of the polymer fine particles (A) is readily enabled. Accordingly, in addition to capability of imparting low glossiness and/or light diffusibility to the substrate resin (D), the matte resin composition and the light diffusible resin composition can be provided with excellent uniformity of these characteristics in the composition. The volume mean particle size more preferably falls within the range of 100 to 4,000 µm. Also, it is more preferred that the amount of the fine powder having a volume mean particle size of no greater than 50 µm accounts for no more than 10% by weight of the total amount When the amount of the fine powder no greater than 50 µm exceeds 15% by weight of the total amount, frequency of occurrence of dusting may be increased, whereby the handleability can be deteriorated.

The aforementioned volume mean particle size can be determined by a method according to a measuring method defined in JIS Z8901 when the value falls within the range of approximately 0.2 to 700 µm, while it can be determined by an image analysis of 100 particles selected at random through light microscopic observation, when the value falls within the range exceeding approximately 700 µm.

The measurement of the amount of the fine powder described above can be carried out according to, for example, the measuring method defined in JIS Z8901.

Furthermore, since the resin composition used in the light diffusion plate of the present invention includes such polymer particles (C) having favorable powder characteristics, favorable handleability is attained, and deterioration of the working environment due to severe dusting caused when a conventional resin composition is used can be prevented. In addition, the productivity can be markedly improved since the dust explosion risk can be significantly reduced.

Hereinafter, the polymer particle (C) used in the matte resin composition may be referred to as matte polymer particle (C); the polymer particle (C) used in the light diffusible resin composition may be referred to as light diffusible polymer particle (C); and the substrate resin (D) may be referred to as transparent resin (D). Moreover, the substrate resin (D) and the polymer particles (C) that constitute the resin composition of the present invention may be used in any combination ratio as long as necessary characteristics of the molded article are not impaired.

### Substrate Resin (D)

The substrate resin (D) is employed as a matrix resin, and is preferably at least one selected from the group consisting of generally known thermoplastic resins, thermosetting resins, and elastomers.

With respect to the transparent resin (D), the total light transmittance of the molded product having a thickness of 3 mm consisting of the transparent resin (D) alone, as determined according to the measuring method defined in JIS K7361-1 is no less than 40%, more preferably no less than 50%, and particularly preferably no less than 80% so that an excellent light diffusion performance can be achieved. When the transparent resin (D) having this total light transmittance of no greater than 40% is used, the transparency may be inferior, and the light diffusion performance may not be achieved.

The molded product having a thickness of 3 mm can be obtained according to a known method such as press molding, injection molding, extrusion molding. For example, the total light transmittance of the molded product obtained by injection molding can be measured using a commercially available light transmittance measuring apparatus.

Further, a (meth)acrylic ester based resin such as a methyl polymethacrylate resin or a methyl methacrylate-butyl acrylate copolymer resin, a polycarbonate based resin, a styrene based resin such as polystyrene, a methyl methacrylate-styrene copolymer resin, a styrene-acrylonitrile copolymer resin, an acrytonitrile-butadiene rubber-styrene copolymer (ABS) resin, or a vinyl chloride based resin is preferred as such a transparent resin (D) due to excellent versatility. The aforementioned transparent resin can be used alone, or in combination. However, it is preferred to use alone since total light transmittance is likely to be decreased when multiple resins are used in combination.

### Various Additives

Additives usually blended in molded articles, if necessary, such as e.g., a plasticizer, a curing agent, a dispersant, a leveling agent of any type, an ultraviolet ray absorbing agent, a viscosity modifier, a lubricant, a degradation preventive agent, an antistatic agent, a fire retardant, a fluorescent whitening agent, a fluorescent dye, a pigment, a colorant, a stabilizer such as an oxidation inhibitor (for example, sulfur-containing molecules, phosphite, hindered phenol, hypophosphite, phosphonite etc.) and a light stabilizer (ultraviolet ray stabilizers etc.), a tackifier, a release agent, an impact resistance improver, a processing aid, a foaming agent, a filler (for example, glass fiber etc.), a reinforcing agent, a thermal stabilizer may be used ad libitum in the resin composition of the present invention.

### Light Diffusible Resin Composition

In the light diffusible resin composition, the compounding proportion of the light diffusible polymer particles (C) per the transparent resin (D) is 0.1 to 500 parts by weight,

Optimal compounding proportion can be determined based on the correlation between the characteristics (total light transmittance, refractive index, etc.) of the transparent resin (D), and the characteristics (total light transmittance, refractive index, mean particle size, etc.) of the light diffusible polymer particles (C). For example, in connection with the difference in the refractive indices of the light diffusible polymer particles (C) and the transparent resin (D), the compounding proportion is preferably increased for achieving favorable light diffusibility when the difference is small, while the compounding proportion is preferably decreased for achieving favorable light transmittivity when the difference is great Also, in connection with relative mean particle size of the light diffusible polymer particles (C), the compounding proportion is preferably decreased for achieving favorable light transmittivity when the mean particle size is small, while the compounding proportion is preferably increased so as to provide favorable smoothness of the light diffusion plate surface, and not to make the coating of the light diffusible resin composition difficult when the mean particle size is great

In the case of use as a light diffusible resin composition, the absolute value of the difference in the refractive indices (n²⁵_{D}) of the polymer fine particles (A) and the substrate resin (D) falls within the range of preferably 0.001 to 0.3, more preferably 0.003 to 0.3, and still more preferably 0.005 to 0.2. The aforementioned refractive index (n²⁵_{D}) is a value of the refractive index of D ray determined according to the measuring method defined in JIS K7142 at 25°C. When the difference in the refractive indices is less than (±) 0.001, the light that passed through the light diffusion plate may not be refracted enough, and thus the entered light is highly likely to exit directly, whereby favorable light diffusibility may not be exhibited. Also, when the difference in the refractive indices is greater than 0.3 to the contrary, light refraction inside the light diffusion plate may become so great that the outgoing light is highly likely to be little with respect to the entered light, whereby low total light transmittance of the light diffusion plate may be provided.

The light diffusible resin composition can be processed into a plate shape by, for example, a casting polymerization process in which mixture or a dispersion of the light diffusible polymer particles (C) with a monomer, a monomer mixture, or a mixture (syrup) of a polymer and a monomer used for production of the transparent resin (D) is allowed to polymerize in a mold; a process in which a mixture prepared by mixing and dispersing the light diffusible polymer particles (C) in the transparent resin (D) is pelletized using a extruder or the like, followed by extrusion molding or injection molding; a process in which the transparent resin (D) including the light diffusible polymer particles (C) dispersed therein is uniformly applied on one or both face(s) of a flat plate-shape or film-shape resin.

Accordingly, the light diffusible resin composition processed into the plate shape can be used for: transmissive screens for projection televisions; light diffusion plates for backlight of liquid crystal display; and light diffusion plates which require light diffusibility and/or light transmittivity which can be used in lighting covers, illuminated signs.

Such light diffusion plates preferably have favorable light transmittivity and light diffusibility, and more specifically, they have a light transmission, which can be an index of light transmittivity, of a light diffusion plate having a thickness of 3 mm measured according to JIS K7361-1 being no less than 10%, and a haze ratio value which can be an index of light diffusibility be no less than 40%. The light transmission is more preferably no less than 40%, and still more preferably no less than 80%. When it is less than 10%, too low light transmission may lead to failure in use as a light diffusion plate. In addition, the haze ratio value is more preferably no less than 50%, and still more preferably no less than 90%. When it is less than 40%, too low light diffusibility may lead to failure in use as a light diffusion plate. Such light transmittivity and light diffusibility of the light diffusion plate, of course, may vary depending on the thickness of the light diffusion plate, the mean particle size of the polymer fine particles (A), the difference in the refractive indices between the polymer fine particles (A) and the transparent resin (D), the content of the light diffusible polymer particles (C) in the light diffusion plate.

### Polymer Fine Particle (A)

The volume mean particle size of the polymer fine particles (A) falls within the range of preferably 1 to 50 µm, and more preferably 1 to 30 µm. When the volume mean particle size of the polymer fine particles (A) is less than 1 µm, relative increase of the light reflective face concomitant with the relative increase of the particle surface area tends to result in lowering of the light transmittivity and deterioration of the matte effect of the molded product obtained from the resin composition including the polymer particles (C). To the contrary, when the volume mean particle size of the polymer fine particles (A) is greater than 50 µm, the polymerization may be unstabilized because of generation of scale in production of the polymer particles (C). In addition, the powder characteristics are likely to be deteriorated, and further, the molded product obtained from the resin composition including thus resultant polymer particles (C) may have inferior appearance of the surface.

Moreover, the polymer fine particles (A) are adjusted to have a refractive index (n²⁵_{D}) value falling within the range of preferably 1.350 to 1.650, and more preferably 1.400 to 1.600 by regulating the polymer composition.

Additionally, although the polymer fine particles (A) may have a monolayer structure, for example, if necessary, a multilayered structure having two or more layers can be employed ad libitum such as: a structure in which the inner layer is constituted with a polymer having high Tg while the outer layer is constituted with a polymer having low Tg, i.e., a structure including different polymer compositions; or a structure in which the inner layer has a low crosslinking density while the outer layer has a higher crosslinking density compared to the inner layer, or a structure in which the inner layer is crosslinked while the outer layer is not crosslinked, i.e., a structure having different crosslinking density for each layer.

The polymer fine particles (A) can be polymerized from a polymerizable monomer generally used in an emulsion polymerization process, or a suspension polymerization process. More specifically, the latex including the polymer fine particles (A) can be produced by polymerization of the polymerizable monomer described later according to a known emulsion polymerization process or suspension polymerization process. However, in light of convenience in the polymerization step, the suspension polymerization process is particularly preferred for the production. Alternatively, when the polymer fine particles (A) are the polyorganosiloxane polymer fine particles described later, the production process may include solution polymerization followed by forced emulsification.

Moreover, when the molded article produced using the resin composition of the present invention needs to have a characteristic such as impact resistance, the polymer fine particles (A) are preferably (meth)acrylic acid alkyl ester based polymer fine particles, or polyorganosiloxane polymer fine particles, since those homopolymers have a glass transition temperature of no higher than 0°C. In other words, when a monomer that yields the homopolymer having a glass transition temperature of no lower than 0°C is used in this step, impact resistance can be deteriorated.

The (meth)acrylic add alkyl ester based polymer fine particle is a fine particle obtained by polymerization of the (meth)acrylic acid alkyl ester based monomer, and a polyfunctional monomer having no less than two polymerizable unsaturated groups in the molecule.

The polyorganosiloxane polymer fine particle is produced by polycondensation of at least one kind of compound selected from modified or unmodified polyorganosiloxane, cyclic siloxane, and polyfunctional silane that is used if necessary, and preferably has a low content of volatile siloxane having a low molecular weight. Such polyorganosiloxane polymer fine particles can be also formed by a known process described in, for example, Japanese Unexamined Patent Application Nos. Hei 11-222554 and 2001-288269.

### Process for Producing Polymer Fine Particle (A)

In polymerization process of the polymer fine particles (A), it is preferred that a mixture containing a polymerizable monomer, a water-insoluble material, an oil soluble polymerization initiator, an emulsifying agent and/or a suspension dispersant including a water soluble high-molecular weight compound, and water is first prepared, and then mechanical shearing is applied to this mixture to prepare an O/W emulsion, followed by introducing thus prepared O/W emulsion into a polymerization apparatus and further elevating the temperature to allow the O/W emulsion to be polymerized.

This step for preparing the emulsion is preferably carried out while regulating the shearing strength using a dispersion apparatus which can regulate the shearing strength in order to control the particle size of the O/W emulsion. Also, it is more preferred that a cooling operation is conducted in parallel such that initiation of the polymerization due to heat generation resulting from the shearing is hampered. Moreover, in order to obtain an O/W emulsion having more uniform particle size distribution, it is preferred to use a membrane emulsification process in which emulsification is carried out while passing through a porous structure, and to use a hydrophilic membrane is particularly preferred in order to simplify the operation since miscibility with the disperse phase is important as a property of the membrane used in this step.

In this polymerization step, it is preferred to conduct the polymerization while stirring using a polymerization apparatus having a stirring device and a heating/cooling device such as a jacket, and to conduct the polymerization while heating or cooling as needed is more preferred.

Also, in order to produce the latex of the polymer fine particles (A) having a volume mean particle size of 1 to 50 µm, it is preferred to further add one or more kinds of monomers continuously or intermittently which are selected from the polymerizable monomers if necessary during the polymerization and/or after completing the polymerization. In addition, a chain transfer agent can be also used optionally, which has been generally used in emulsion polymerization processes, and suspension polymerization processes.

Moreover, in production of the polymer particles (C) through efficient granulation and suspension polymerization of the polymer fine particles (A), it is more preferable to use an anionic emulsifying agent as the suspension dispersant, and the amount of the used anionic emulsifying agent is preferably approximately 0.01 to 50 parts by weight, and more preferably approximately 0.01 to 5 parts by weight per 100 parts by weight of the polymerizable monomer.

The polymerization temperature in polymerization of the polyorganosiloxane polymer fine particles is preferably no lower than 0°C and no higher than 100°C, and more preferably no higher than 50°C, and still more preferably no higher than 30°C. Further, it is preferable to conduct forced emulsion polymerization by adding an acid to the system for adjusting to provide an acidic condition. In this case, the pH in polymerization is preferably no higher than 4, more preferably no higher than 3, and particularly preferably no higher than 2. Furthermore, following completing the polymerization under the acidic condition, the molecular weight of polyorganosiloxane is increased if necessary through aging the latex at around the room temperature for several hours or longer, and thereafter an inorganic base such as sodium hydroxide, potassium hydroxide, sodium carbonate or ammonia, or an organic base such as alkylamine or alkylammonium hydroxide may be added to neutralize the system to adjust the pH of 5 to 8, thereby capable of terminating the polymerization of siloxane.

In addition, when the acidic polymerization condition is employed in the forced emulsion polymerization, the emulsifying agent preferably used may be one which exerts the surface active performance also under an acidic condition.

Moreover, in the method in which the solution polymerization is followed by the forced emulsification, it is preferred to additionally adjust to have a desired particle size by a dispersing device after adding water, an emulsifying agent to the system.

### Polymerizable Monomer (B)

As the polymerizable monomer (B), one that is similar to the polymerizable monomer used in the production of the polymer fine particles (A) can be used, however, it is not necessary to use the same type of the polymerizable monomer used in the production of the polymer fine particles (A), and can be selected appropriately depending on the intended use, characteristics. For example, when the polymer particles (C) are used as, for example, a resin modifier, it is preferable to employ one or more kinds of monomers selected from (meth)acrylic add alkyl ester based monomers, aromatic vinyl based monomers, vinyl cyanide based monomers, vinyl acetate, and vinyl chloride as the polymerizable monomer (B), in light of affinity with the matrix resin. Additionally, a chain transfer agent can be used arbitrarily also in polymerization of this polymerizable monomer (B).

The compounding ratio (weight ratio) of the polymer fine particles (A) and the polymerizable monomer (B) falls within the range of preferably 0.5:99.5 to 95:5, and more preferably 2:98 to 85:15. When the polymer fine particles (A) are less than 0.5% by weight and the polymerizable monomer (B) is more than 99.5% by weight, too low content of the polymer fine particles (A) tends to result in difficulty in exhibiting the physical properties derived from the high-molecular weight fine particles (A). Moreover, when the polymer fine particles (A) are more than 95% by weight and the polymerizable monomer (B) is less than 5% by weight, deterioration of the powder characteristics of the product may be caused such as generation of fine powder due to the presence of the polymer fine particle (A) not incorporated into the polymer particle (C).

### Process for Producing Polymer Particle (C)

When the polymer particles (C) are produced, the process for mixing the latex of the polymer fine particles (A), the polymerizable monomer (B), the polymerization initiator, the suspension dispersant including a water soluble high-molecular weight and a water insoluble inorganic material, and the coagulating agent is not particularly limited, and any known mixing bath having a stirring device, a polymerization apparatus, can be used. Furthermore, the order of adding these components, and the rate of the addition can be determined ad libitum depending on the composition of the polymer fine particles (A), or on the particle size of the polymer particles (C) adjusted following the granulation or suspension polymerization. However, in light of the production efficiency, the process in which the polymerizable monomer (B), the polymerization Initiator, the suspension dispersant and the coagulating agent are added in the presence of the latex of the polymer fine particles (A), followed by granulation and suspension polymerization is preferred. With respect to the production of the latex of the polymer fine particles (A) and the production of the polymer particles (C), they may be either produced separately, or produced concurrently.

The granulation means a step of disrupting the emulsified state of the latex of the polymer fine particles (A) by mixing the latex of the polymer fine particles (A), the polymerizable monomer (B), the polymerization initiator, the suspension dispersant and the coagulating agent, and allowing the state of dispersion to transit into a suspension system with a volume mean particle size of 100 to 6,000 µm. According to the present invention, efficient transition of the latex of the polymer fine particles (A) into a suspension system with a volume mean particle size of 100 to 6,000 µm is enabled by the granulation step, and further, the following suspension polymerization of the resultant system allows the polymer particles (C) of the present invention to be efficiently produced.

Also, the solid content of the polymerization system after adding the latex of the polymer fine particles (A), the polymerizable monomer (B), the polymerization initiator, the suspension dispersant and the coagulating agent can be predetermined ad libitum depending on the viscosity of the system. However, in view of the viscosity of the polymerization system and production efficiency, the solid content is preferably adjusted to 15 to 40% by weight.

As the polymerization initiator used in producing the polymer particles (C), one that is similar to the oil soluble polymerization initiator used in producing the polymer fine particles (A) can be used. However, in the production of the polymer fine particles (A) and the polymer particles (C), it is not necessary to use the same type of the polymerization initiator.

Moreover, as the suspension dispersant used in producing the polymer particles (C), one selected from the compound similar to the water soluble polymer used in producing the polymer fine particles (A), and the water insoluble inorganic material described later may be used.

Furthermore, with respect to the amount of the used suspension dispersant, although the polymerization can be stably performed with the amount employed in common suspension polymerization, the suspension dispersant is used in the range of preferably 0.01 to 30 parts by weight, and more preferably 0.01 to 20 parts by weight per 100 parts by weight of the total amount of the resin solid content of the latex of the polymer fine particles (A) and the polymerizable monomer (B).

The coagulating agent which may be suitably used in producing the polymer particles (C) can be selected from acids such as hydrochloric add and sulfuric acid, and salts such as calcium chloride, magnesium chloride, sodium sulfate, magnesium sulfate, calcium carbonate and calcium acetate. Among these, sodium sulfate and calcium chloride are more preferred in light of efficient coagulation of the polymer fine particles (A).

The amount and type of the used coagulating agent may vary depending on the amount and type of the suspension dispersant used in producing the polymer fine particles (A), and preferable amount and type may be appropriately selected. However, for example, the coagulating agent is used in the range of preferably 0.1 to 20 parts by weight, and more preferably 0.1 to 15 parts by weight per 100 parts by weight of the total amount of the resin solid content of the latex of the polymer fine particles (A) and the polymerizable monomer (B).

In the production method, when any coagulating agent is not used at all, most of the polymer fine particles (A) remain without being incorporated in the polymer particles (C). Accordingly, due to the presence of the remaining polymer fine particles (A), the filtrate after the polymerization tends to get turbid. In addition, the production efficiency of the polymers particles (C) may be exacerbated, and the powder characteristics may be deteriorated, thereby being likely to result in severe dusting and inferior handleability.

### Illustration of Emulsion Polymerization Process, and Suspension Polymerization Process

Specific examples of preferable emulsion polymerization process or suspension polymerization process described above include the process illustrated in Japanese Unexamined Patent Application No. Sho 63-137911, Japanese Unexamined Patent Application No. Hei 2-311685, Japanese Unexamined Patent Application No. Hei 7-238200, Japanese Unexamined Patent Application No. Hei 8-198903, Japanese Unexamined Patent Application No. 2001-294631, Japanese Unexamined Patent Application No. Hei 10-87710, Japanese Unexamined Patent Application No. Hel 10-120714, or Japanese Unexamined Patent Application No. Hei 10-120715.

### Polymerizable Monomer

Illustrative polymerizable monomer which can be suitably used herein may be e.g., one, or two or more monomers selected from a (meth)acrylic acid alkyl ester based monomer, an aromatic vinyl based monomer, a vinyl cyanide based monomer, vinyl acetate, and vinyl chloride, as well as a monomer consisting of a polyfunctional monomer having two or more polymerizable unsaturated groups in the molecule. Also, illustrative examples of preferred polymerizable monomer used in polymerization of the polyorganosiloxane polymer fine particles include at least one kind of compounds selected from modified or unmodified polyorganosiloxane, cyclic siloxane, and polyfunctional silane.

Illustrative examples of the (meth)acrylic acid alkyl ester based monomer include methyl (meth)acrylate, ethyl (meth)acylate, propyl (meth)acrylate, butyl (meth)acrylate, n-octyl (meth)acrylate, and 2-ethylhexyl (meth)acrylate.

Illustrative examples of the aromatic vinyl based monomer styrene include α-methylstyrene, chlorostyrene, chloromethylstyrene.

Illustrative typical examples of the vinyl cyanide based monomer include acrylonitrile, methacrylonitrile, ethacrylonitrile.

Illustrative examples of the monomer consisting of a polyfunctional monomer having two or more polymerizable unsaturated groups in the molecule include allyl (meth)acrylate, diallyl phthalate, ethylene glycol di(meth)acrylate, 1,3-butylene glycol di(meth)acrylate, diallyl itaconate, divinylbenzene, triallyl cyanurate, triallyl isocyanurate.

The modified or unmodified polyorganosiloxane may be either linear or branched, and preferably has a hydrolyzable group at the end and may be partially substituted with a radical reactive group as needed. Moreover, the content of a volatile low-molecular weight siloxane is preferably no higher than 5% by weight, and more preferably no higher than 1% by weight. Additionally, its weight average molecular weight (Mw) is preferably no higher than 20,000, more preferably no higher than 10,000, even more preferably no higher than 5,000, and particularly preferably no higher than 2,500. By using such a material and selecting the polymerization conditions, the polymer fine particle (A) with reduced volatile low-molecular weight siloxane can be obtained.

Examples of the hydrolyzable group include a hydroxyl group, an amino group, or an alkoxyl group, an acyloxy group, a ketoxime group, an alkenoxy group, an amide group, an aminoxy group.

Preferably, the radical reactive group may be a mercaptopropyl group, a methacryloyloxypropyl group, an acryloyloxypropyl group, a vinyl group, a vinylphenyl group, an allyl group.

Illustrative examples of the cyclic siloxane include hexamethylcyclotrisiloxane, octamethylcyclotetrasiloxane, decamethylcyclopentasiloxane, dodecamethylcyclohexasiloxane, tetradecamethylcycloheptasiloxane.

Illustrative examples of the polyfunctional silane can include trifunctional or higher functional alkoxysilane, condensates of trifunctional or higher functional silane, and silane compounds having a radical reactive group.

Examples of the trifunctional or higher functional alkoxysilane herein include methyltriethoxysilane, tetrapropyloxysilane and the like; examples of the condensate of the trifunctional or higher functional silane include methylorthosilicate and illustrative examples of the silane compound having a radical reactive group include mercaptopropyldimethoxymethylsilane, acryloyloxypropyldimethoxymethylsilane, methacryloyloxypropyldimethoxymethylsilane, vinyldimethoxymethylsilane, vinylphenyldimethoxymethylsilane.

### Chain Transfer Agent

The chain transfer agent may be any one of those commonly used in emulsion polymerization processes and suspension polymerization processes, and examples thereof include alkyl mercaptan such as t-dodecyl mercaptan, n-dodecyl mercaptan, t-decyl mercaptan, n-decyl mercaptan and n-octyl mercaptan, alkyl ester mercaptan such as 2-ethylhexyl thioglycolate.

### Water Insoluble Material

As the water insoluble material, a substance having a solubility in 20°C water of no greater than 0.05% by weight and having a molecular weight of no higher than 20,000 can be preferably used. For example, one, or a combination of two or more selected from: (meth)acrylic acid alkyl ester based monomers having a long-chain alkyl group having 12 to 30 carbon atoms typified by stearyl methacrylate and dinonylphenyl methacrylate; higher alcohols having 12 to 22 carbon atoms typified by cetyl alcohol and stearyl alcohol; hydrocarbons typified by hexadecane and octadecane, halogenated hydrocarbons typified by 1-chlorododecane and 1-chlorodecane, as well as a variety of macromonomers having a (meth)acryloyl group, a p-styrylalkyl group, a dihydroxyl group or a dicarboxyl group or the like at the end, which are typified by, for example, AA-6 (manufactured by Toagosei Chemical Industry Co., Ltd.) having methyl methacrylate, as a principal component of the segment, having a methacryloyl group at the end, and having a number average molecular weight of 6,000, or AB-6 (manufactured by Toagosei Chemical Industry Co., Ltd.) having butyl acrylate as a principal component of the segment, having a methacryloyl group at the end, and having a number average molecular weight of 6,000 can be used.

However, when the polymer particles (C) obtained by the present invention are used as a resin modifier, use of a nonpolymerizable compound such as one of higher alcohols, hydrocarbons and halogenated hydrocarbons as the water insoluble material may lead to likelihood of causing problems such as excess lubricating properties and generation of gas in molding, due to the water insoluble material remained in the polymer particle. In order to solve these problems, use of a polymerizable water insoluble material having at least one polymerizable unsaturated group in the molecule is preferred.

### Oil soluble Polymerization Initiator

As the oil soluble polymerization initiator, one, or a combination of two or more selected from organic peroxides typified by benzoyl peroxide, lauroyl peroxide, stearoyl peroxide and octanoyl peroxide, azo based compounds typified by 2,2'-azobisisobutyronitrile, 2,2'-azobis(2,4-dimethylvaleronitrile), 2,2'-azobis(4-methoxy-2,4-dimethylvaleronitrile), 2,2'-azobis(2-methylbutyronitrile) can be suitably used.

In addition, even in the case in which the oil soluble polymerization initiator is used, a water soluble polymerization inhibitor typified by, for example, sodium nitrite or hydroquinone can be used in combination as needed in order to prevent initiation of the polymerization not in the droplet containing the polymerizable monomer but in the water phase.

### Suspension Dispersant

The suspension dispersant is used for preparing the emulsion.

In polymerization of the polymer fine particles (A), a known emulsifying agent and/or a water soluble polymer, compound can be used, and for example, the emulsifying agent, the water soluble polymer compound exemplified below can be used alone, or in combination of two or more thereof. Also, an emulsion can be prepared in a stable manner with the amount used in common suspension polymerization, thereby enabling polymerization.

In addition, when the polymer particles (C) are produced, one selected from the compounds similar to the water soluble polymer used in producing the polymer fine particles (A) described above, and the water insoluble inorganic materials described later may be used.

### Emulsifying Agent

Examples of the emulsifying agent Include anionic emulsifying agents, nonionic emulsifying agents.

Illustrative examples of the anionic emulsifying agent include carboxylic acid based emulsifying agents, sulfonic acid based emulsifying agents, sulfuric acid based emulsifying agents, succinic acid based emulsifying agents, phosphoric add based emulsifying agents.

Illustrative examples of the nonionic emulsifying agent include polyoxyalkylene alkyl ether typified by polyoxyethylene dodecyl ether, polyoxyalkylene alkylaryl ether typified by polyoxyethylene nonylphenyl ether, polyoxyalkylene higher fatty acid esters typified by polyoxyethylene stearic acid esters, sorbitan monolauric acid esters.

As the emulsifying agent which can exert the surface active performance even under the acidic condition, for example, anionic emulsifying agents such as metal salts of alkylsulfuric acid esters, metal salts of alkylsulfonic acids and metal salts of alkylarylsulfonic acids may be exemplified. In addition, preferable metal salts are alkali metal salts, and particularly sodium salts, and potassium salts. Among them, sodium salts are more preferable, and sodium dodecylbenzene sulfonate is most preferred. In addition, as the emulsifying agent which can exert the surface active performance even under the acidic condition, not only the aforementioned anionic emulsifying agent, but also the nonionic emulsifying agent described above can be also used, and further, such agent and the anionic emulsifying agent can be used in combination.

### Water Soluble Polymer Compound

Illustrative examples of the water soluble polymer compound include naturally occurring water soluble polymers such as starch and gelatin, and polyvinyl alcohol, polyvinylpyrrolidone, polyacrylate, polymethacrylate, polyvinyl ether, polyethylene oxide, methyl cellulose, hydroxymethyl cellulose, hydroxypropylmethyl cellulose, carboxymethyl cellulose, sulfonated polystyrene glycol, styrene-maleic add copolymer, and vinyl acetate-maleic add copolymer.

### Water Insoluble Inorganic Material

Illustrative examples of the water insoluble inorganic material include phosphate metal salts such as tricalcium phosphate, calcium hydroxyphosphate, and magnesium carbonate, calcium carbonate, barium carbonate, magnesium oxide, calcium pyrophosphate, magnesium pyrophosphate, magnesium hydroxide, aluminum hydroxide, hydroxyapatite, talc.

### Acid for Setting Acidic Condition

As the acid for providing the acidic condition used in polymerizing the polyorganosiloxane polymer fine particles, an inorganic acid such as sulfuric acid, hydrochloric acid or nitric acid can be used. An organic acid such as dodecylbenzenesulfonic add, dodecylsulfuric acid or triftuoroacetic acid can be also used. The alkylarylsulfonic acid typified by dodecylbenzene sulfonic acid is preferably used since it functions not only as an add component but also as an emulsifying agent, and use of this compound alone may be enough as the case may be. However, the agent is not limited to the foregoings, and the add, or the emulsifying agent may be used either alone, or in combination of multiple components.

### Dispersing Device

A known dispersing device such as, for example, a high-pressure homogenizer, a homomixer, an ultrasonic dispersing device or a centrifuge pump can be suitably used as the dispersing device. Further, the device preferably has a cooling mechanism which allows a cooling operation to be conducted. Moreover, the device preferably has a mechanism for carrying out a membrane emulsification method, more specifically, a plate or tubular porous structure at a part thereof.

The porous structure is not particularly limited as long as a structure having a large number of pores which may be either or not a porous membrane having a uniform pore size, and specifically, a hydrophilic porous structure or a hydrophobic porous structure may be exemplified. Still further, illustrative examples of the hydrophilic porous structure include porous glass membranes, hydrophilic polytetrafluoroethylene (PTFE) membranes, cellulose acetate membranes, nitrocellulose membranes, hydrophilized metal porous structures (Kohs MAZZER, Ramond Supermixer® etc.). Illustrative examples of the hydrophobic porous structure can include hydrophobic PTFE membranes, and those hydrophilyzing processed products of the aforementioned various porous membranes and porous structured subjected to a surface treatment or the like, and hydrophobic membranes obtained by a treatment such as impregnation of the membrane in fat/oil.

### Substrate Resin (D): Illustration of Thermoplastic Resin.

Examples of preferred thermoplastic resin which can be used as the substrate resin (D) include polycarbonate resins such as aromatic polycarbonate and aliphatic polycarbonate, polyester resins, polyester carbonate resins, polyphenylene ether resins, polyphenylene sulfide resins, polysulfone resins, polyether sulfone resins, polyarylene resins, polyamide resins such as nylon, polyetherimide resins, polyacetal resins such as polyoxymethylene, polyvinyl acetal resins, polyketone resins, polyether ketone resins, polyether ether ketone resins, polyaryl ketone resins, polyether nitrile resins, liquid crystal resins, polybenzimidazole resins, polyparabanic acid resins, vinyl based polymer or copolymer resins, which are obtained by polymerizing or copolymerizing at least one vinyl monomer selected from the group consisting of aromatic alkenyl compounds, methacrylic acid esters, acrylic acid esters and vinyl cyanide compounds, vinyl cyanide-(ethylene-propylene-diene (EPDM))-aromatic alkenyl compound copolymer resins, polyolefin resins, vinyl chloride based resins, cellulose resins such as acetyl cellulose. These may be used alone, or as a blend of two or more thereof

In particular for light diffusion plates, that require light diffusibility and transmittivity, examples of the preferable thermoplastic resin which can be used as the transparent resin (D) include polycarbonate resins such as aromatic polycarbonate and aliphatic polycarbonate, polyester resins, polyvinyl acetal resins, vinyl based polymer or copolymer resins obtained by polymerizing or copolymerizing at least one vinyl monomer selected from the group consisting of aromatic alkenyl compounds, methacrylic acid esters, acrylic acid esters and vinyl cyanide compounds, transparent polyolefins such as polypropylene, vinyl chloride based resins, transparent cellulose resins such as acetyl cellulose. These may be used alone, or as a blend of two or more thereof.

### Polyphenylene Ether Resin

The polyphenylene ether resin means a homopolymer, or a copolymer represented by the following general formula 1.

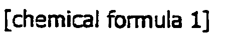

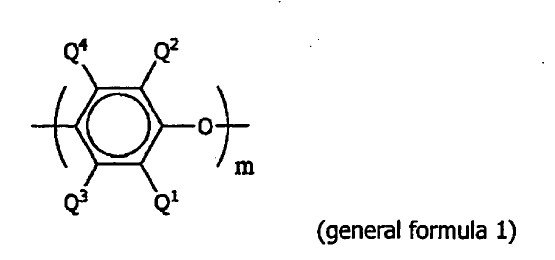

wherein, Q¹ to Q⁴ represent a group each independently selected from the group consisting of hydrogen and a hydrocarbon group; and m represents an integer of no less than 30.
Specific examples of the polyphenylene ether resin include poly(2,6-dimethyl-1,4-phenylene) ether, poly(2-methyl-6-propyl-1,4-phenylene) ether, poly(2,6-diethyl-1,4-phenylene) ether, poly(2-ethyl-6-propyl-1,4-phenylene) ether, poly(2,6-dipropyl-1,4-phenylene) ether, copolymers of (2,3,6-trimethyl-1,4-phenylene) ether with (2,6-dimethyl-1,4-phenylene) ether, copolymers of (2,3,6-trimethyl-1,4-phenylene) ether with (2,6-diethyl-1,4-phenytene) ether, copolymers of (2,3,6-triethyl-1,4-phenylene) ether with (2,6-dimethyl-1,4-phenylene) ether.

In particular, poly(2,6-dimethyl-1,4-phenylene) ether, and the copolymers of (2,3,6-trimethyl-1,4-phenylene) ether with (2,6-dimethyl-1,4-phenylene) ether are preferred in light of capability of improving the heat resistance, and poly(2,6-dimethyl-1,4-phenylene) ether is most preferred in light of capability of particularly improving the heat resistance.

These polyphenylene ether resins have a compatibility with polystyrene resins at any proportions of the blend. The degree of polymerization of the polyphenylene ether resin used in the present invention is not particularly limited, but those having a reduced viscosity of 0.3 to 0.7 dl/g as measured at 25°C with a solution prepared by dissolving 0.2 g of the resin in 100 cm³ chloroform, may be preferably used. The resin having the reduced viscosity of less than 0.3 dl/g may lead to inferior thermostability, while the resin having the reduced viscosity exceeding 0.7 dl/g may result in impaired formability. These polyphenylene ether resins can be used alone, or two or more kinds of them may be used as a mixture.

The polyphenylene ether resin can be used as a mixture with other resin, and preferably, can be used as a mixture with the polystyrene resin described later. The blend proportion of the polyphenylene ether resin and other resin when used as a mixture can be determined to fall within a known range.

### Vinyl Chloride Based Resin

The vinyl chloride based resin means a vinyl chloride homopolymer resin, a chlorinated vinyl chloride resin, a chlorinated polyethylene resin, or a copolymer resin of vinyl chloride with other vinyl monomer having at least one double bond which can be copolymerized with vinyl chloride. In the copolymer resin with vinyl chloride, the other vinyl monomer is included in an amount of preferably no more than 50% by weight, and more preferably no more than 45% by weight, and examples include ethylene, propylene, vinyl acetate, (meth)acrylic acid, and esters thereof, maleic acid and esters thereof, vinylidene chloride, vinyl bromide, and acrylonitrile. These vinyl chloride based resins are obtained by homopolymerization or copolymerization of vinyl chloride alone, or of vinyl chloride with the other vinyl monomer in the presence of a radical polymerization initiator. It is preferred that this vinyl chloride based resin has a degree of polymerization of usually in the range of 400 to 4500, and particularly 400 to 1500.

### Vinyl Based Polymer or Copolymer Resin

The vinyl based polymer or copolymer resin may be copolymerized with a diene based monomer, an olefin based monomer, a maleimide based monomer, and these may be further hydrogenated. Examples of those include e.g., polystyrene resins, s-polystyrene resins, polymethylmethacrylate resins, polychlorostyrene resins, polybromostyrene resins, poly α-methylstyrene resins, styrene-acrylonitrile copolymer resins, styrene-methylmethacrylate copolymer resins, acrylonitrile-styrene-methylmethacrylate copolymer resins, styrene-maleic anhydride copolymer resins, styrene-maleimide copolymer resins, styrene-N-phenylmaleimide copolymer resins, styrene-N-phenylmaleimide-acrylonitrile copolymer resins, methylmethacrylate-butylacrylate copolymer resins, methylmethacrylate-ethylacrylate copolymer resins, styrene-acrylonitrile-α-methylstyrene ternary copolymer resins, butadiene-styrene copolymer (HIPS) resins containing a diene based component or a phenylmaleimide component, acrylonifile-butadiene rubber-styrene copolymer (ABS) resins, acrylonitrile-butadiene rubber-α-methylstyrene copolymer resins, and aromatic alkenyl compound-diene-vinyl cyanide-N-phenylmaleimide copolymer resins.

### Polyamide Resin

Examples of the polyamide resin include polyamide resins derived from diamine and dicarboxylic acid, polyamide resins obtained by ring-opening polymerization of lactams, polyamides obtained from 6-aminocaproic acid, 1,1-aminoundecanoic add, 1,2-aminododecanoic acid or the like, and copolymers thereof, or blends of the same. Among them, those which can be industrially produced at low cost on a large scale, such as nylon 6, nylon 6,6, nylon 11, nylon 12, nylon 6, 10, nylon 4, 6, and copolymers thereof, or blends of the same are suitable.

The diamine may be aliphatic, alicyclic, or aromatic diamine, such as ethylenediamine, tetramethylenediamine, hexamethylenediamine, decamethylenediamine, dodecamethylenediamine, 2,2,4- and 2,4,4-trimethylhexamethylenediamine, 1,3-bis(aminomethyl)cyclohexane, 1,4-bis(aminomethyl)cyclohexane, bis(p-aminocydohexyl)methane, m-xylylenediamine, p-xylenediamine.

The dicarboxylic add may be aliphatic, alicyclic, or aromatic dicarboxylic acid, such as adipic acid, suberic acid, sebacic acid, cyclohexanedicarboxylic acid, terephthalic acid, isophthalic acid.

Examples of the lactam include ε-caprolactam, ω-dodecalactam.

### Polyester Resin

Illustrative examples of the polyester resin can include resins obtained by polycondensation of a diol and dicarboxylic add or a derivative such as an alkyl ester of dicarboxylic acid, resins obtained by polycondensation of a monomer having both a hydroxyl group, and carboxylic acid or a derivative such as an alkyl ester of carboxylic acid In one molecule, and resins obtained by ring-opening polymerization of a monomer having a cyclic ester structure in one molecule.

Examples of the dicarboxylic add include e.g., terephthalic acid, isophthalic acid, adipic acid, and sebacic acid. Examples of the diol include e.g., ethanediol, propanediol, butanediol, pentanediol, and hexanediol. Examples of the monomer having both a hydroxyl group, and carboxylic acid or a derivative such as an alkyl ester of carboxylic acid in one molecule include e.g., hydroxyalkanoic add such as lactic add and hydroxypropionic acid. Examples of the monomer having a cyclic ester structure in one molecule include e.g., caprolactone.

Specific examples of the polyester resin include polymethylene terephthalate, polyethylene terephthalate, polypropylene terephthalate, polytetramethylene terephthalate, polybutylene terephthalate, polyhexamethylene terephthalate, polyethylene naphthalate, polylactic acid, polyhydroxybutyric acid, polybutylene sucdnate, poly-ε-caprolactone, poly(α-hydroxy acid) and copolymers thereof, and blends of the same. In the present invention, polybutylene terephthalate, polyethylene terephthalate, and polylactic acid are particularly preferred excellent since they have excellent optical characteristics and processing characteristics.

### Polyphenylene Sulfide Resin

It is preferred that the polyphenylene sulfide resin be a polymer having a degree of polymerization of 80 to 300, and including no less than 50% by mole and preferably no less than 70% by mole of a recurring unit represented by the following general formula 2. Also, exemplary copolymerizable components include the components having a recurring unit represented by the following general formula 3, and these copolymerizable components are preferably included in an amount of 10% by mole or less.

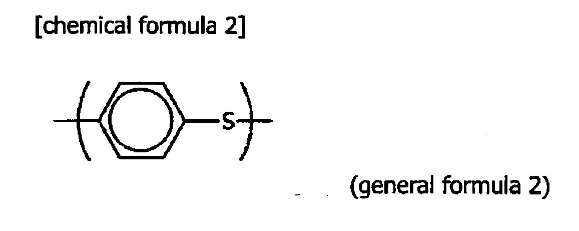

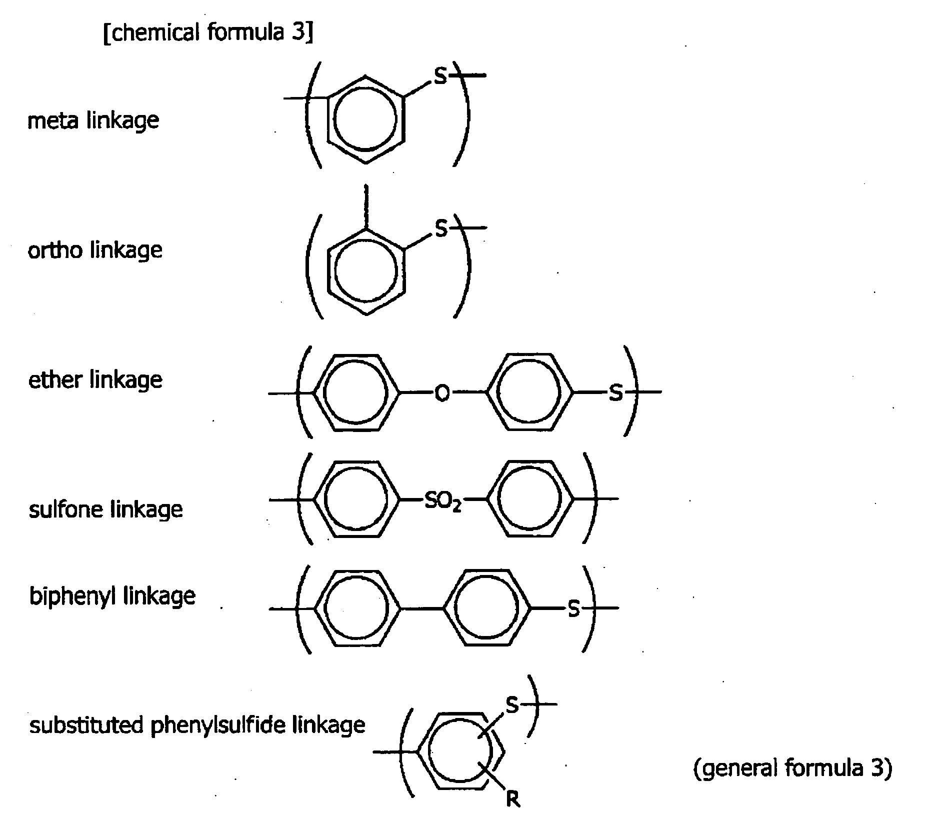

wherein, R represents an alkyl group, a nitro group, a phenyl group, an alkoxy group, a carboxylic acid group, or a metal salt of carboxylic acid.
Polysulfone Resin
Although the polysulfone resins that are polymers containing an -SO₂- group can be generally classified into aromatic resins and olefin based resins, the aromatic resins are preferred as typical one which can be used as the substrate resin (D) in the present invention, and their examples include: polymers having a recurring unit represented by the following general formula 4 which are obtained by a condensation polymerization reaction of dichlorodiphenyl sulfone; polymers having a recurring unit represented by the following general formula 5 which are obtained from dichlorodiphenyl sulfone and bisphenol A. In general, the former is referred to as a polyether sulfone resin, and the latter is referred to as a polysulfone resin, and these are both useful in the present invention.

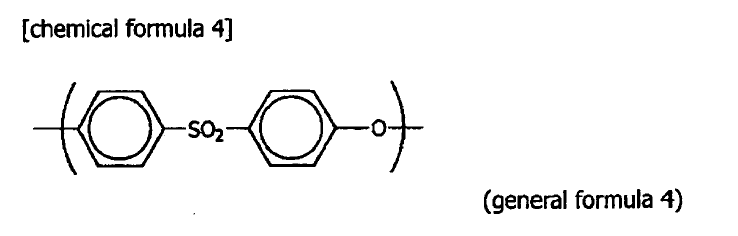

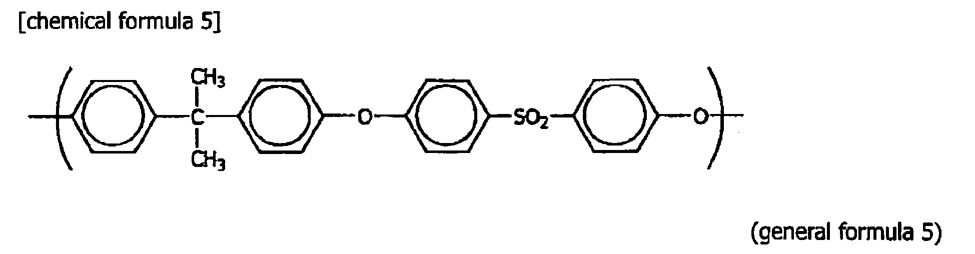

### (Polyetherimide resin)

Illustrative examples of the polyetherimide resin include polymers having a recurring unit represented by the following general formula 6 having both an ether linkage and an imide linkage.

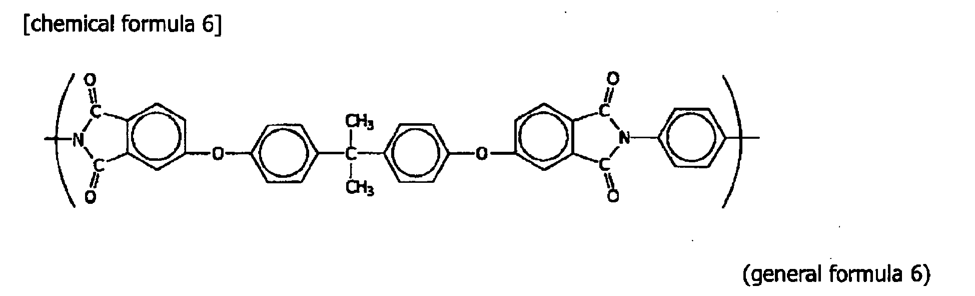

### Polyvinyl acetal Resin

The polyvinyl acetal resin may be a modified product of polyvinyl alcohol with an aldehyde, such as polyvinyl formal, polyvinyl butyral.

### Polyolefin Resin

Examples of the polyolefin resin include polymers of olefin alone typified by polyethylene, polypropylene, polymethylpentene, polybutene, polymers or copolymers cycloolefin. In addition, copolymers of olefin and a compound having at least one copolymerizable double bond are also included in the resins which can be used as the resin (D) of the present invention. Examples of such compounds that are copolymerizable with the olefin include (meth)acrylic add and esters thereof, maleic acid and esters thereof, maleic anhydride, vinyl acetate. These copolymerizable compounds are preferably included in the resin at a proportion of no greater than 10% by weight. Furthermore, the concept of the polyolefin resin which can be used in the present invention also involves copolymers obtained by hydrogenation of a copolymer of a diene based component and other vinyl based monomer, such as e.g., acrylonitrile-EPDM-styrene copolymer (AES) resins, and the like. Also, these polyolefin resins preferably have a degree of polymerization falling within the range of 300 to 6,000.

### Polyarylene Resin

Examples of the polyarylene resin include e.g., poly(p-phenylene), poly(2,5-thienylene), poly(1,4-naphthalenediyl).

### Polycarbonate Resin

The polycarbonate resin is obtained by allowing bivalent phenol to react with phosgene or a carbonate precursor.

The bivalent phenol is preferably bis(hydroxyaryl)alkane, and examples thereof include e.g., bis(hydroxyphenyl)methane, 1,1-bis(4-hydroxyphenyl)ethane, 1,2-bis(4-hydroxyphenyl)ethane, 2,2-bis(hydroxyphenyl)propane, 2,2-bis(4-hydroxyphenyl-3-methylphenyl)propane, 2,2-bis(4-hydroxy-3,5-dibromophenyl)propane, 2,2-bis(4-hydroxy-3,5-dichlorophenyl)propane, 2,2-bis(hydroxyphenyl)hexafluoropropane.
Examples of the other bivalent phenol include: bis(4-hydroxyphenyl)cycloalkane such as 1,1-bis(4-hydroxyphenyl)cyclohexane, 1,1-bis(4-hydroxyphenyl)-3,3,5-trimethylcydohexane, and 1,1-bis(4-hydroxyphenyl)cyclodecane; fluorene derivatives such as 1,1-bis(4-hydroxyphenyl)fluorene, 1,1-biscresolfluorene, and 1,1-bisphenoxyethanolfluorene; phenyl group-containing bis(hydroxyphenyl)alkane such as phenylbis(hydroxyphenyl)methane, diphenylbis(hydroxyphenyl)methane, and 1-phenyl-1,1-bis(4-hydroxyphenyl)ethane; 4,4'-dihydroxydiphenyl, bis(4-hydroxyphenyl)oxide; bis(4-hydroxyphenyl)sulfide; bis(4-hydroxyphenyl)sulfone; bis(4-hydroxyphenyl)sulfoxide; bis(4-hydroxyphenyl)ketone; hydroquinone; piperazine; dipiperidylhydroquinone; resorcin.
These bivalent phenols may be used alone, or as a mixture. Moreover, the bivalent phenol not including halogen is preferably used among these in light of excellent safety and optical characteristics. Particularity preferred bivalent phenols are bis(hydroxyphenyl)methane, 2,2'-bis(hydroxyphenyl)propane, and 1,1-bis(4-hydroxyphenyl)fluorene.

Examples of the carbonate precursor include diaryl carbonate such as diphenyl carbonate, dialkyl carbonate such as dimethyl carbonate and diethyl carbonate. In addition to these aromatic polycarbonate resins, an aliphatic polycarbonate resin such as polyethylene carbonate can be also used. These polycarbonate resins may be copolymerized with dimethyl siloxane in its main chain.

### Polyketone

Examples of the polyketone include e.g., alternating copolymers of ethylene and carbon monoxide, alternating copolymers of α-olefin and carbon monoxide.

### Substrate Resin (D): Illustration of Thermosetting Resin

Examples of preferred thermosetting resin which can be used as the substrate resin (D) include, for the resin composition to be used in applications that require light diffusibility and light transmittivity, epoxy resins, polyamideimide resins, thermosetting polyester resins (unsaturated polyester resins), silicone resins, urethane resins, (meth)acrylic resins, fluorene based resins. In addition, a phenol resin, an urea resin, a melamine resin, a polyimide resin, an alkyd resin, a polyvinyl ester resin, a diallyl polyphthalate resin, a bismaleimide-triazine resin, a furan resin, a xylene resin, a guanamine resin, a maleic resin, a dicyclopentadiene resin, and a polyether resin can be also used as the thermosetting substrate resin (D) according to the present invention.

Among them, those including the epoxy resin described below in an amount of no less than 50% by weight per total weight of the thermosetting resin are preferred because these epoxy resins can be cured using a phenol resin such as phenol novolak, aliphatic amine, aromatic amine, or add anhydride, as well as a carboxylic acid derivative such as blocked carboxylic acid. Of these, a phenol resin is more preferably used in light of, in particular, high heat resistance of the resulting cured product.

The epoxy resin may be one or more kinds of epoxy resins selected from biphenol, or aromatic nucleus-substituted biphenol, a diglycidyl ether thereof, or a condensate of the same, a novolak type epoxy resin, a dicyclopentadienyl epoxy resin, and an alicyclic epoxy resin including a cycloolefin oxide structural skeleton in one molecule.

### Epoxy Resin

The epoxy resin which can be used as the substrate resin (D) of the present invention may be an epoxy resin which can be generally used, such as a novolak type epoxy resin, a biphenyl type epoxy resin, or an alicyclic epoxy resin.

The novolak type epoxy resins include phenol novolak type epoxy resins, cresol novolak type epoxy resins, and the like, which are prepared by glycidyl etherification of novolak resins obtained by condensation of phenols, biphenols, or naphthols with an aldehyde.

The biphenyl type epoxy resin may be, for example, 2,2',6,6'-tetramethylbiphenol diglycidyl ether.

The alicyclic epoxy resin may be a polyvalent phenol, a polyglycidyl ether of a polyhydric alcohol, or a condensate thereof, or an alicyclic epoxy resin that includes a cycloolefin oxide structural skeleton in one molecule.

The polyvalent phenols herein include biphenol, aromatic nucleus-substituted biphenols, bisphenol A, bisphenol F, bisphenol S, trimethylolpropane.

### Substrate resin (D): Illustration of Elastomer

Preferable elastomer which can be used as the substrate resin (D) may be a natural rubber, or a synthetic rubber. Of these, as the synthetic rubber, any of a variety of synthetic rubbers can be used e.g., acrylic rubbers such as butyl acrylate rubbers, ethyl acrylate rubbers and octyl acrylate rubbers, nitrile rubbers such as butadiene-acrylonitrile based copolymers, chloroprene rubbers, butadiene rubbers, isoprene rubbers, isobutylene rubbers, styrene-butadiene rubbers, methyl methacrylate-butyl acrylate block copolymers, styrene-isobutylene block copolymers, styrene-butadiene block copolymers, hydrogenated styrene-butadiene block copolymers, ethylene-propylene copolymers (EPR), ethylene-propylene-diene copolymers (EPDM), polyurethane, chlorosulfonatd polyethylene, silicone rubber (millable type, room-temperature vulcanized type), butyl rubbers, fluorene rubbers, olefin based thermoplastic elastomers, styrene based thermoplastic elastomers, vinyl chloride based thermoplastic elastomers, urethane based thermoplastic elastomers, polyamide based thermoplastic elastomers, polyester based thermoplastic elastomers, fluorene based thermoplastic elastomers

### EXAMPLES

Hereinafter, the present invention will be explained with reference to specific examples, but these examples are provided just for illustrative purposes, and the present invention is not any how limited thereto.

### Various Measuring Methods

Various measuring methods in the following description are first explained.

The volume mean particle size, and the amount of fine powder of no greater than 50 µm were determined by observing with a light microscope, or a microtrack particle size analyzer Model 9220FRA (manufactured by Nikkiso Co., LTD.) according to the measuring method defined in JIS Z8901, followed by image analysis of 100 particles selected randomly.

Also, the turbidity of the filtrate following the polymerization of the matte polymer particles (C) was determined by observing the filtrate of the slurry obtained by filtering with a qualitative filter paper No. 2 manufactured by Advantec Toyo Kaisha, Ltd.

The light transmittivity was evaluated by measuring the total light transmittance using an integrating sphere type haze turbidimeter (manufactured by Nippon Denshoku Industries Co., Ltd., NDH 2000) according to the measuring method defined in JIS K7361-1.

The light diffusibility was evaluated by measuring haze using an integrating sphere type haze turbidimeter (manufactured by Nippon Denshoku Industries Co., Ltd., NDH 2000) according to the measuring method defined in JIS K7136.

The glossiness was evaluated by measuring a glossiness of the molded product at an incident angle of 60° using a gloss meter (manufactured by BYK Gardner, Micro-TRI-gloss) according to the measuring method defined in ASTM D-523.

In Gardner impact test, the measurement was made under conditions at 23°C, relative humidity of 50%, and 8 lbs (unit: inch. lb/mil) according to the measuring method defined in ASTM D-4226.

Izod strength was measured using a test piece No. 2 (A notch, width b = 6.4 ± 0.3 mm) at a temperature of 23°C, and a relative humidity of 50% (unit: kJ/m²) according to the measuring method defined in JIS K7110.

The tensile impact strength was measured under conditions at 23°C, relative humidity of 50% (unit: kJ/m²) according to the measuring method defined in JIS K7160 (test piece: type 3).

The powder characteristic of the resin composition was evaluated based on the handleability in operation. More specifically, when almost no dusting was found in dealing with the resin composition, evaluation was made as "A"; and when severe dusting was found, evaluation was made as "B"

Hereinbelow, abbreviation "MMA" represents methyl methacrylate; abbreviation "BA" represents butyl acrylate; abbreviation "PMMA" represents polymethyl methacrylate; abbreviation "MB" represents a methyl methacrylate-butyl acrylate copolymer, abbreviation "MS" represents methyl methacrylate-styrene copolymer, abbreviation "PC" represents polycarbonate; abbreviation "PVC" represents polyvinyl chloride; and abbreviation "Si" represents polyorganosiloxane.

, Moreover, the polymer particles (A) including BA as a principal component were useD in, Examples 1, 2 and 3, and Comparative Examples 1 and 2; the polymer particles (A) including MMA as a principal component were used in Example 4; and the polymer particles (A) including polyorganosiLoxane (Si) as a principal component were used in Example 5. Additionally, a method of producing the polymer particles (C) is demonstrated in which each of the polymer particles (A) were used, and MMA/BA was further polymerized in the production.

In the following, Examples 6 to 15, and Comparative Examples 3 to 8 demonstrate a light diffusible resin composition, and a molded product constituted with the light diffusible resin composition. A polymethyl methacrylate resin (PMMA) was used as the substrate resin (D) in Examples 6 to 8, and Comparative Examples 3 and 4; a methylmethacrylate-styrene copolymer resin (MS) was used in Examples 9 to 11, and Comparative Examples 5 and 6; and a polycarbonate resin (PC) was used in Examples 12 to 15, and Comparative Examples 7 and 8, whereby the molded articles were obtained with the resin compositions, respectively.

Moreover, examples of the molded articles are demonstrated which were obtained, respectively, using: in Examples 6,9 and 12 the polymer particles (C) obtained in Example 1; in Examples 7,10 and 13 the polymer particles (C) obtained in Example 4; in Examples 8, 11, 14, and 15 the polymer particles (C) obtained in Example 5; in Comparative Examples 3, 5, and 7 a commercially available light diffusing agent in place of the polymer particles (C); and without using the polymer particles (C) in Comparative Examples 4, 6 and 8.

The resin compositions used in molding in each Example and each Comparative Example are shown in Table 1 and the evaluation results of the obtained molded articles are shown in Table 2. Further, details of each Example and each Comparative Example are described below.

**[Table 1]**

| | Resin composition | | | | | | |
|---|---|---|---|---|---|---|---|
| | Production method of polymer particles (C) | | | | | Added amount by part | Substrate resin (transparent resin) |
| | Polymer fine particles (A) | | Polymer particles (C) | | | | |
| | Composition | Particle size (µm) | Composition of polymerizable monomer (B) | Particle size (µm) | Amount of fine powder (wt%, 50 µm or below) | | |
| Ex. 6 | BA | 5.1 | MMA/BA | 330 | 0 | 2 | PMMA |
| Ex. 7 | MMA | 2.7 | MMA/BA | 210 | 2 | 2 | PMMA |
| Ex. 8 | SI | 8.6 | MMA/BA | 250 | 0 | 1 | PMMA |
| Compar. Ex. 3 | MBX-5 | | | 5 | 100 | 2 | PMMA |
| Compar. Ex. 4 | | | | | | 0 | PMMA |
| Ex. 9 | BA | 5.1 | MMA/BA | 330 | 0 | 0.2 | MS |
| Ex. 10 | MMA | 2.7 | MMA/BA | 210 | 2 | 0.2 | MS |
| Ex. 11 | SI | 8.6 | MMA/BA | 250 | 0 | 0.1 | MS |
| Compar. Ex. 5 | MBX-5 | | | 5 | 100 | 0.2 | MS |
| Compar. Ex. 6 | | | | | | 0 | MS |
| Ex. 12 | BA | 5.1 | MMA/BA | 330 | 0 | 0.2 | PC |
| Ex. 13 | MMA | 2.7 | MMA/BA | 210 | 2 | 0.2 | PC |
| Ex. 14 | SI | 8.6 | MMA/BA | 250 | 0 | 0.1 | PC |
| Ex. 15 | SI | 8.6 | MMA/BA | 250 | 0 | 0.5 | PC |
| Compar. Ex. 7 | MBX-5 | | | 5 | 100 | 0.2 | PC |
| Compar. Ex. 8 | | | | | | 0 | PC |

**[Table 2]**

| | Physical properties of molded product | | | | |
|---|---|---|---|---|---|
| | Total light transmittance (%) | Haze (%) | Izod [(kJ/m2)] | Handle-ability | Glossiness |
| Ex. 6 | 94.4 | 91.6 | 4 | A | 83 |
| Ex. 7 | 87 | 40 | 3.1 | A | 88 |
| Ex. 8 | 91.3 | 73.2 | 3.9 | A | |
| Compar. Ex. 3 | 90.8 | 40 | 3.1 | B | 86 |
| Compar. Ex. 4 | 92.1 | 0.8 | 3.1 | | 143 |
| Ex. 9 | 93.2 | 93.2 | 3.6 | A | 95 |
| Ex. 10 | 91 | 90.7 | 3.5 | A | 94 |
| Ex. 11 | 90.2 | 75.4 | 3.8 | A | |
| Compar. Ex. 5 | 94 | 90.7 | 3.5 | B | 92 |
| Compar. Ex. 6 | 91.1 | 0.9 | 3.5 | | 166 |
| Ex. 12 | 87.4 | 94.2 | 11.1 | A | 103 |
| Ex. 13 | 88.1 | 94.6 | 11.0 | A | 105 |
| Ex. 14 | 80.5 | 79.5 | 11.5 | A | |
| Ex. 15 | 56.2 | 99.1 | 11.9 | A | |
| Compar. Ex. 7 | 91.7 | 94.6 | 11.0 | B | 103 |
| Compar. Ex. 8 | 89.9 | 0.6 | 11.0 | | 185 |

### Example 1 (Reference)

### Production of Polymer Particles (A) of Example 1

A uniformly dissolved mixture of 6.75 parts by weight of butyl acrylate, 0.14 parts by weight of allyl methacrylate, 0.04 parts by weight of 1,3-butylene glycol dimethacrylate, 0.07 parts by weight of stearyl methacrylate, and 0.2 parts by weight of lauroyl peroxide was prepared. To this mixture was added a solution including 10 parts by weight of water, and 0.02 parts by weight of sodium dodecylbenzenesulfonate, and mixed. Mechanical shearing was applied to this mixture with T. K. ROBO MIXER (manufactured by Tokusyukika Kogyo Co., Ltd.) at a revolution speed of 7,000 rpm for 10 min to prepare an O/W emulsion.

To a glass reaction vessel charged with 210 parts by weight of water, 0.01 parts by weight of sodium nitrite, and 0.05 parts by weight of sodium dodecylbenzenesulfonate, was added a dispersion liquid containing this prepared emulsion, and the temperature was elevated to 65°C while stirring in a nitrogen gas stream, and the system was stirred while keeping the temperature at 65°C for 30 min.

Next, after 0.2 parts by weight of sodium dodecylbenzenesulfonate was added to the system, 61.4 parts by weight of butyl acrylate, 1.3 parts by weight of allyl methacrylate, and 0.3 parts by weight of 1,3-butylene glycol dimethacrylate were continuously added over three hours. Thereafter, the system was stirred while keeping the temperature at 65°C for 1 hour to obtain a polymerization system including the latex of the polymer fine particles (A) having a volume mean particle size of 5.1 µm.

An aqueous calcium chloride solution was added to an aliquot taken from the latex of the polymer fine particles (A) to permit salt precipitation. The polymer fine particle (A) resin obtained by filtration of the solution was press molded into a flat plate having a thickness of 1 mm, which had a refractive index as measured using Abbe's refractometer (manufactured by ATAGO CO., LTD, Abbe refractometer 2T) at 25°C of 1.463.

### Production of Polymer Particles (C) of Example 1

Next, after the polymerization system including the latex of the polymer fine particles (A) was cooled to 40°C, 220 parts by weight of water was added thereto, whereby final solid content was adjusted to about 20% by weight. Then, a uniformly dissolved mixture of 27 parts by weight of methyl methacrylate, 3 parts by weight of butyl acrylate, and 0.3 parts by weight of 2,2'-azobis(2-methylbutyronitrile) was added batchwise, and stirred for 10 min. Thereafter, 0.1 parts by weight of polyvinyl alcohol KH-17 (manufactured by Nippon Synthetic Chemical Industry Co., Ltd.) as a suspension dispersant was added, and the mixture was stirred for 20 min. Subsequently, thereto was added 7 parts by weight of sodium sulfate as a coagulating agent, and the mixture was stirred for 10 min, followed by elevation of the temperature to 80°C over 4 hrs. Thereafter, the system was stirred while keeping the temperature at 80°C for one hour to obtain the polymer particles (C). Thus resulting polymer particles (C) had a volume mean particle size of 330 µm, and the amount of fine powders of no greater than 50 µm being 0% by weight The filtrate following the polymerization was colorless and transparent.

### Example 2 (Reference)

The polymer fine particles (A) and the polymer particles (C) were produced in a similar manner to Example 1 except that the mechanical shearing was applied with T. K. ROBO MIXER (manufactured by Tokusyukika Kogyo Co., Ltd.) at a revolution speed of 4,000 rpm for 2 min to prepare an O/W emulsion in production of the polymer fine particles (A). The resulting polymer fine particles (A) had a volume mean particle size of 22.2 µm. The polymer particles (C) had a volume mean particle size of 360 µm, and the amount of fine powders of no greater than 50 µm being 0% by weight The filtrate following the polymerization was colorless and transparent

### Example 3 (Reference)

### Production of Polymer Particles (A) of Example 3

An O/W emulsion was prepared similarly to Example 1. Next, in a similar manner to Example 1, to a glass reaction vessel charged with 210 parts by weight of water, 0.01 parts by weight of sodium nitrite, and 0.05 parts by weight of sodium dodecylbenzenesulfonate, was added a dispersion liquid containing this prepared emulsion. The temperature was elevated to 65°C while stirring in a nitrogen gas stream, and the system was stirred while keeping the temperature at 65°C for 30 min.

Next, after 0.14 parts by weight of sodium dodecylbenzenesulfonate was added to the system, 41.9 parts by weight of butyl acrylate, 0.9 parts by weight of allyl methacrylate, and 0.2 parts by weight of 1,3-butylene glycol dimethacrylate were continuously added over two hours. Thereafter, the system was stirred while keeping the temperature at 65°C for 1 hour to obtain a polymerization system including the latex of the polymer fine particles (A) having a volume mean particle size of 4.6 µm.

### Production of Polymer Particles (C) of Example 3

Next, after the polymerization system including the latex of the polymer fine particles (A) was cooled to 40°C, 90 parts by weight of water was added thereto, whereby final solid content was adjusted to about 25% by weight Then, after 2 parts by weight of sodium sulfate as a coagulating agent was added thereto and stirred for 10 min, 0.2 parts by weight of tricalcium phosphate as a suspension dispersant was added. Thereafter, a uniformly dissolved mixture of 45 parts by weight of methyl methacrylate, 5 parts by weight of butyl acrylate, 0.3 parts by weight of 2-ethylhexyl thioglycolate, and 0.5 parts by weight of lauroyl peroxide was added batchwise, and stirred for 30 min. Subsequently, 0.1 parts by weight of polyvinyl alcohol KH-17 as a suspension dispersant was added, and the mixture was stirred for 20 min, followed by elevation of the temperature to 80°C over 4 hrs. Thereafter, the system was stirred while keeping the temperature at 80°C for one hour to obtain the polymer particles (C). Thus resulting polymer particles (C) had a volume mean particle size of 3100 µm, and the amount of fine powders of no greater than 50 µm being 0% by weight The filtrate following the polymerization was colorless and transparent.

### Example 4 (Reference)

### Production of Polymer Particles (A) of Example 4

A uniformly dissolved mixture of 64.5 parts by weight of methyl methacrylate, 2.0 parts by weight of 1,3-butylene glycol dimethacrylate, 3.5 parts by weight of dinonylphenyl methacrylate, and 0.2 parts by weight of lauroyl peroxide was prepared. To this mixture was added a solution including 230 parts by weight of water, 0.2 parts by weight of sodium dodecylbenzenesulfonate, 0.7 parts by weight of polyvinyl alcohol GH-23 (manufactured by Nippon Synthetic Chemical Industry Co., Ltd.), and 0.015 parts by weight of sodium nitrite, and mixed. Mechanical shearing was applied to this mixture with T. K. ROBO MIXER at a revolution speed of 6,000 rpm for 20 min to prepare an O/W emulsion. The entirety of the dispersion liquid including thus prepared O/W emulsion was tansferred to a glass reaction vessel, and the temperature was elevated to 65°C while stirring in a nitrogen gas stream. Then, the system was stirred while keeping the temperature at 65°C for 5 hrs to obtain a polymerization system including the latex of the polymer fine particles (A) having a volume mean particle size of 2.7 µm.

An aqueous caldum chloride solution was added to an aliquot taken from the latex of the polymer fine particles (A) to permit salt precipitation. The polymer fine particle (A) resin obtained by filtration of the solution was press molded into a flat plate having a thickness of 1 mm, which had a refractive index as measured using Abbe's refractometer (manufactured by ATAGO CO., LTD, Abbe refractometer 2T) at 25°C of 1.490.

### Production of Polymer Particles (C) of Example 4

Thereafter, the polymer particles (C) of Example 4 were produced in a similar manner to the Production of Polymer Particles (C) of Example 1. Thus resulting polymer particles (C) had a volume mean particle size of 210 µm, and the amount of fine powders of no greater than 50 µm being 2% by weight The filtrate following the polymerization was colorless and transparent

### Example 5 (Reference)

### Production of Polymer Particles (A) of Example 5

A mixture including 200 parts by weight of water, 0.5 parts by weight of sodium dodecylbenzenesulfonate, 1 part by weight of dodecyl benzenesulfonate, 100 parts by weight of terminal hydroxyorganopolysiloxane (manufactured by Dow Coming Toray Silicone Co., Ltd., trade name: PRX413), and 5 parts by weight of γ-methacryloxypropylmethyldimethonsilane (DSMA) was mechanically sheared with T. K. ROBO MIXER at a revolution speed of 10,000 rpm for 5 min to prepare an O/W siloxane emulsion. Next, this siloxane emulsion was rapidly charged batchwise into a flask equipped with a stirrer, a reflux condenser, a nitrogen blowing inlet, a monomer addition port and a thermometer The system was allowed to react while stirring at 30°C for 6 hrs. Next, the system was cooled to 23°C, and left to stand for 20 hrs. The pH of the system was then adjusted to 6.8 with sodium hydroxide to terminate the polymerization, whereby a latex of polyorganosiloxane polymer particles (A) having a volume mean particle size of 8.6 µm was obtained.

An aqueous calcium chloride solution was added to an aliquot taken from the latex of the polyorganosiloxane polymer fine particles (A) to permit salt precipitation. The polymer fine particle (A) resin obtained by filtration of the solution was press molded into a flat plate having a thickness of 1 mm, which had a refractive index as measured using Abbe's refractometer (manufactured by ATAGO CO., LTD, Abbe refractometer 2T) at 25°C of 1.402.

### Production of Polymer Particles (C) of Example 5

Next, water was added to 70 parts by weight (solid content) of this latex of polyorganosiloxane polymer particles (A) to adjust the final solid content of about 20% by weight Thetemperature of the mixture was elevated to 40°C, while stirring in a nitrogen gas stream. After the temperature reached to 40°C, 0.1 parts by weight of sodium formaldehydesulfoxylate, 0.0028 parts by weight of disodium ethylenediaminetetraacetate, and 0.0007 parts by weight of ferrous sulfate were added thereto. Thereafter, 1.5 parts by weight of allyl methacrylate and 0.025 parts by weight of cumene hydroperoxide were mixed, and then added batchwise thereto. The mixture was kept stirring at 40°C for 1 hour. Then, a uniformly dissolved mixture of 27 parts by weight of methyl methacrylate, 3 parts by weight of butyl acrylate, and 0.3 parts by weight of 2,2'-azobis(2-methylbutyronitrile) was added batchwise, and stirred for 10 min. Thereafter, 0.1 parts by weight of polyvinyl alcohol KH-17 (manufactured by Nippon Synthetic Chemical Industry Co., Ltd.) was added, and the mixture was stirred for 20 min. Subsequently, thereto was added 4 parts by weight of calcium chloride as a coagulating agent, and the mixture was stirred for 10 min, followed by elevation of the temperature to 80°C for 4 hrs. Thereafter, the system was stirred while keeping the temperature at 80°C for one hour to obtain the polymer particles (C). Thus resulting polymer particles (C) had a volume mean particle size of 250 µm, and the amount of fine powders of no greater than 50 µm being 0% by weight. The filtrate following the polymerization was colorless and transparent.

### Comparative Example 1

The polymer fine particles (A) and the polymer particles (C) were produced in a similar manner to Example 1 except that the mechanical shearing was applied with T. K. ROBO MIXER (manufactured by Tokusyukika Kogyo Co., Ltd.) at a revolution speed of 2,000 rpm for 2 min to prepare an O/W emulsion in production of the polymer fine particles (A). The resulting polymer fine particles (A) had a volume mean particle size of 60 µm. In this example, inferior polymerization stability was found, and a large amount of scales were generated in production of the polymer particles (C).

### Comparative Examples 2

The polymer fine particles (A) and the polymer particles (C) were produced in a similar manner to Example 1 except that sodium sulfate as the coagulating agent was not added in production of the polymer particles (C). The resulting polymer fine particles (A) had a volume mean particle size of 5.1 µm. However, there were a large amount of polymer fine particles (A) not incorporated into the polymer particles (C) in production of the polymer particles (C). Thus, the polymer particles (C) included 90% by weight of fine powders of no greater than 50 µm, whereby the powder characteristics of the product were significantly inferior as compared with those obtained in Example 1.

### <Light Diffusible Resin Composition and Molded Product Constituted with Light Diffusible Resin Composition>

### Example 6

A mixture prepared by adding 2 parts by weight of the polymer particles (C) obtained in Example 1 and 0.2 parts by weight of Adekastab 2112 (manufactured by Asahi Denka Kogyo K. K.) as an oxidation inhibitor to 100 parts by weight of a polymethylmethacrylate resin (manufactured by Cyro Industries, ACRYLITE® H-12, n²⁵_{D}: 1.489, total light transmittance of its molded product having a thickness of 3 mm: 92.1%) was kneaded and extruded using a single screw extruder with a vent (HW-40-28: 40 m/m, L/D = 28, manufactured by TABATA Industrial Machinery Co., Ltd.) at a preset temperature C3 = 200°C, and pelletized. Thus resulting pellets were dried at 90°C for 4 hrs or longer, and thereafter subjected to injection molding using an injection molding machine (model 160MSP-10, manufactured by Mitsubishi Plastics, Inc.) at a cylinder temperature C3 = 250°C, and a nozzle temperature N = 255°C to obtain a flat plate sample having a thickness of 3 mm. Also, a test piece for measuring Izod strength was obtained under the same pelletization and injection molding conditions.

### Example 7

A molded article was obtained in a similar manner to Example 6 except that the polymer fine particles (C) obtained in Example 4 were used in place of the polymer particles (C) obtained in Example 1.

### Example 8

A molded article was obtained in a similar manner to Example 6 except that 1 part by weight of the polymer fine particles (C) obtained in Example 5 were used in place of the polymer particles (C) obtained in Example 1.

### Comparative Example 3

A molded article was obtained in a similar manner to Example 6 except that a light diffusing agent manufactured by Sekisui Plastics Co., Ltd. (crosslinked polymethyl methacrylate resin, Techpolymer MBX-5, mean particle size: 5 µm, n²⁵_{D}: 1.490) was used in place of the polymer particles (C) obtained in Example 1.

### Comparative Example 4

A molded article was obtained in a similar manner to Example 6 except that the polymer particles (C) were not used.

### Example 9

A mixture of 100 parts by weight of a methylmethacrylate-styrene copolymer resin (manufactured by Nippon Steel Chemical Co., Ltd., Estyrene MS MS-600, n²⁵_{D}: 1.530, total light transmittance of its molded product having a thickness of 3 mm: 91.1%), and 0.2 parts by weight of the polymer particles (C) obtained in Example 1 was kneaded and extruded using a single screw extruder with a vent (HW-40-28: 40 m/m, L/D = 28, manufactured by TABATA Industrial Machinery Co., Ltd.) at a preset temperature C3 = 180°C, and pelletized. Thus resulting pellets were dried at 80°C for 3 hrs or longer, and thereafter subjected to injection molding using an injection molding machine (model 160MSP-10, manufactured by Mitsubishi Plastics, Inc.) at a cylinder temperature C3 = 220°C, and a nozzle temperature N = 225°C to obtain a flat plate sample having a thickness of 3 mm. Also, a test piece for measuring Izod strength was obtained under the same pelletization and injection molding conditions.

### Example 10

A molded article was obtained in a similar manner to Example 9 except that the polymer fine particles (C) obtained in Example 4 were used in place of the polymer particles (C) obtained in Example 1.

### Example 11

A molded article was obtained in a similar manner to Example 9 except that 0.1 parts by weight of the polymer fine particles (C) obtained in Example 5 were used in place of the polymer particles (C) obtained in Example 1.

### Comparative Example 5

A molded article was obtained in a similar manner to Example 9 except that a light diffusing agent manufactured by Sekisui Plastics Co., Ltd. (crosslinked polymethyl methacrylate, resin, Techpolymer MBX-5, mean particle size: 5 µm, n²⁵_{D}: 1.490) was used in place of the polymer particles (C) obtained in Example 1.

### Comparative Example 6

A molded article was obtained in a similar manner to Example 9 except that the polymer particles (C) were not used.

### Example 12

A mixture of 100 parts by weight of a polycarbonate resin (manufactured by Teijin Chemicals Ltd., Panlite L-1225WX, n²⁵_{D}: 1.585, total light transmittance of its molded product having a thickness of 3 mm: 89.9%), and 0.2 parts by weight of the polymer particles (C) obtained in Example 1 was kneaded and extruded using a single screw extruder with a vent (HW-40-28: 40 m/m, L/D = 28, manufactured by TABATA Industrial Machinery Co., Ltd.) at a preset temperature C3 = 260°C, and pelletized. Thus resulting pellets were dried at 140°C for 5 hrs or longer, and thereafter subjected to injection molding using an injection molding machine (model 160MSP-10, manufactured by Mitsubishi Plastics, Inc.) at a cylinder temperature C3 = 265°C, and a nozzle temperature N = 280°C to obtain a flat plate sample having a thickness of 3 mm. Also, a test piece for measuring Izod strength was obtained under the same pelletization and injection molding conditions.

### Example 13

A molded article was obtained in a similar manner to Example 12 except that the polymer fine particles (C) obtained in Example 4 were used in place of the polymer particles, (C) obtained in Example 1.

### Example 14

A molded article was obtained in a similar manner to Example 12 except that 0.1 parts by weight of the polymer fine particles (C) obtained in Example 5 were used in place of 0.2 parts by weight of the polymer particles (C) obtained in Example 1.

### Example 15

A molded article was obtained in a similar manner to Example 12 except that 0.5 parts by weight of the polymer fine particles (C) obtained in Example 5 were used in place of 0.2 parts by weight of the polymer particles (C) obtained in Example 1.

### Comparative Example 7

A molded article was obtained in a similar manner to Example 12 except that a light diffusing agent manufactured by Sekisui Plastics Co., Ltd. (crosslinked polymethyl methacrylate resin, Techpolymer MBX-5, mean particle size: 5 µm, n²⁵_{D}: 1.490) was used in place of the polymer particles (C) obtained in Example 1.

### Comparative Example 8

A molded article was obtained in a similar manner to Example 12 except that the polymer particles (C) were not used.

### Comparison of Each Example, and Each Comparative Example

As shown in Table 2, Examples 6 to 15 in which the polymer particles (C) of the present invention having a volume mean particle size in the range of 100 to 6,000 µm were used exhibited excellent light transmittivity (total light transmittance), light diffusibility (haze), Izod strength, and handleability of the powder. To the contrary, Comparative Examples 3, 5, and 7 in which the light diffusing agent having a mean particle size of 5 µm exhibited significantly inferior handleability of the powder.

## Claims

1. A light diffusion plate consisting of a molded product of a resin composition, having a total light transmittance as measured according to JIS K7361-1 of no less than 10%, and a haze ratio as measured according to JISK-7136 of no less than 40%.
wherein the resin composition comprises 100 parts by weight of a substrate resin (D), and 0.1 to 500 parts by weight of polymer particles (C),
wherein the resin composition is a light diffusible resin composition wherein the polymer particles (C) are light diffusible polymer fine particles,
wherein the substrate resin (D) is at least one resin selected from the group consisting of a thermoplastic resin and a thermosetting resin, and is a transparent resin which, when formed into a molded product having a thickness of 3 mm, Pas a total light transmittance of no less than 40% as determined according to the measuring method defined in JIS K7361-1, and
the polymer particles (C) are obtainable by granulation, and suspension polymerization from a system comprising a latex of polymer fine particles (A) having a volume mean particle size of 1 to 50 µm as determined by a method according to a measuring method defined in JIS Z8901, a polymerizable monomer (B), a polymerization initiator, a suspension dispersant and a coagulating agent, and
the polymer particles (C) have a volume mean particle size of 100 to 6,000 µm as determined by a method according to a measuring method defined in JIS Z8901 when the value falls within the range of 700 µm or below, or by an image analysis of 100 particles selected at random through light microscopic observation when the value falls within the range exceeding 700 µm, and comprise fine powders of no greater than 50 µm at a content of no higher than 15% by weight as determined by the measuring method defined in JIS Z8901.

2. The light diffusion plate according to claim 1, wherein the polymer fine particles (A) and the polymerizable monomer (B) are included in a compounding ratio falling within the range of 0.5: 99.5 to 95: 5 (weight ratio (A) : (B)).

3. The light diffusion plate according to claim 1 or 2, wherein the polymer fine particles (A) are (meth)acrylic acid alkyl ester based polymer fine particles, or polyorganosiloxane polymer fine particles, and have a glass transition temperature of the homopolymer thereof being no higher than 0°C.

4. The light diffusion plate according to any one of claims 1 to 3, wherein the polymerizable monomer (B) is one kind, or two or more kinds of monomers selected from (meth)acrylic acid alkyl ester based monomers, aromatic vinyl based monomers, vinyl cyanide based monomers, vinyl acetate monomers, and vinyl chloride monomers.

5. The light diffusion plate according to any one of claims 1 to 4, wherein the refractive index of the polymer fine particles (A) falls within the range of 1.350 to 1.650, the refractive index being a value of the refractive index of D ray determined according to the measuring method defined in JIS K7142 at 25°C.

6. The light diffusion plate according to any one of claims 1 to 5, wherein the absolute value of the difference in the refractive indices of the polymer fine particles (A) and the substrate resin (D) falls within the range of 0.001 to 0.3, the refractive index being a value of the refractive index of D ray determined according to the measuring method defined in JIS K7142 at 25°C.

## Patentansprüche

1. Eine lichtstreuende Platte, bestehend aus einem Formprodukt aus einer Harzzusammensetzung mit einer gemäß JIS K7361-1 1 gemessenen Gesamtlichtdurchlässigkeit von nicht weniger als 10% und einem gemäß JIS K7136 gemessenen Trübungsverhältnis von nicht weniger als 40%,
wobei die Harzzusammensetzung 100 Gewichtsteile eines Trägerharzes (D) und 0,1 bis 500 Gewichtsteile Polymerteilchen (C) umfasst,
wobei die Harzzusammensetzung eine lichtstreuende Harzzusammensetzung ist, wobei die Polymerteilchen (C) lichtstreuende Polymerfeinteilchen sind,
wobei das Trägerharz (D) mindestens ein Harz, ausgewählt aus der Gruppe bestehend aus einem thermoplastischen Harz und einem duroplastischen Harz, ist und ein transparentes Harz ist, das, wenn daraus ein Formprodukt mit einer Dicke von 3 mm gebildet wird, eine gemäß dem in JIS K7361-1 definierten Messverfahren ermittelte Gesamtlichtdurchlässigkeit von nicht weniger als 40% aufweist und
die Polymerteilchen (C) erhältlich sind durch Granulierung und Suspensionspolymerisation aus einem System, das einen Latex aus Polymerfeinteilchen (A) mit einer volumengemittelten Teilchengröße von 1 bis 50 µm, wie durch ein Verfahren gemäß einem in JIS Z8901 definierten Messverfahren ermittelt, ein polymerisierbares Monomer (B), einen Polymerisationsinitiator, ein Suspensions-Dispergiermittel und ein Koagulierungsmittel umfasst, und
die Polymerteilchen (C) eine volumengemittelte Teilchengröße von 100 bis 6000 µm, wie durch ein Verfahren gemäß einem in JIS Z8901 definierten Messverfahren ermittelt, wenn der Wert im Bereich von 700 µm oder darunter liegt, oder mit einer Bildanalyse von 100 statistisch ausgewählten Teilchen durch lichtmikroskopische Betrachtung ermittelt, wenn der Wert im Bereich oberhalb von 700 µm liegt, aufweisen und Feinpulver mit nicht mehr als 50 µm in einem Anteil von nicht mehr als 15 Gew.-%, wie durch das in JIS Z8901 definierte Messverfahren ermittelt, umfassen.

2. Die lichtstreuende Platte nach Anspruch 1, wobei die Polymerfeinteilchen (A) und das polymerisierbare Monomer (B) in einem Mischungsverhältnis im Bereich von 0,5:99,5 bis 95:5 (Gewichtsverhältnis (A):(B)) enthalten sind.

3. Die lichtstreuende Platte nach Anspruch 1 oder 2, wobei die Polymerfeinteilchen (A) Polymerfeinteilchen auf (Meth)acrylsäurealkylester-Basis oder Polyorganosiloxan-Polymerfeinteilchen sind und eine Glasübergangstemperatur des Homopolymers davon von nicht mehr als 0°C aufweisen.

4. Die lichtstreuende Platte nach einem der Ansprüche 1 bis 3, wobei es sich bei dem polymerisierbaren Monomer (B) um eine Art, oder zwei oder mehr Arten von Monomeren handelt, die aus Monomeren auf (Meth)acrylsäurealkylester-Basis, vinylaromatischen Monomeren, Monomeren auf Vinylcyanid-Basis, Vinylacetat-Monomeren und Vinylchlorid-Monomeren ausgewählt sind.

5. Die lichtstreuende Platte nach einem der Ansprüche 1 bis 4, wobei der Brechungsindex der Polymerfeinteilchen (A) im Bereich von 1,350 bis 1,650 liegt, wobei es sich bei dem Brechungsindex um einen Wert des Brechungsindex eines D-Strahls handelt, der gemäß dem in JIS K7142 definierten Messverfahren bei 25°C ermittelt wird.

6. Die lichtstreuende Platte nach einem der Ansprüche 1 bis 5, wobei der absolute Wert der Differenz zwischen den Brechungsindices der Polymerfeinteilchen (A) und des Trägerharzes (D) im Bereich von 0,001 bis 0,3 liegt, wobei es sich bei dem Brechungsindex um einen Wert des Brechungsindex eines D-Strahls handelt, der gemäß dem in JIS K7142 definierten Messverfahren bei 25°C ermittelt wird.

## Revendications

1. Plaque de diffusion de lumière consistant en un produit moulé d'une composition de résine présentant un coefficient de transmission de lumière totale, mesuré selon JIS K-7361-1, d'au moins 10 %, et un rapport de voile, mesuré selon JIS K-7136, d'au moins 40 %,
dans laquelle la composition de résine comprend 100 parties en masse d'une résine de substrat (D) et de 0,1 à 500 parties en masse de particules de polymère (C),
dans laquelle la composition de résine est une composition de résine diffusible par la lumière, dans laquelle les particules de polymère (C) sont de fines particules de polymère diffusibles par la lumière,
dans laquelle la résine de substrat (D) est au moins une résine choisie dans le groupe constitué d'une résine thermoplastique et d'une résine thermodurcissable, et est une résine transparente qui, lorsqu'elle est façonnée en un produit moulé présentant une épaisseur de 3 mm, présente un coefficient de transmission de lumière totale d'au moins 40 % comme déterminé selon le procédé de mesure défini dans JIS K-7361-1, et
les particules de polymère (C) peuvent être obtenues par granulation, et polymérisation en suspension à partir d'un système comprenant un latex de fines particules de polymère (A) présentant une taille moyenne de particules en volume de 1 à 50 µm déterminée par un procédé selon un procédé de mesure défini dans JIS Z8901, un monomère polymérisable (B), un initiateur de polymérisation, un dispersant de suspension et un agent coagulant, et
les particules de polymère (C) présentent une taille moyenne de particules en volume de 100 à 6 000 µm déterminée par un procédé selon un procédé de mesure défini dans JIS Z8901 lorsque la valeur se trouve dans l'intervalle de 700 µm ou inférieurs, ou par une analyse d'image de 100 parties choisies arbitrairement par observation microscopique à la lumière lorsque la valeur se trouve dans l'intervalle excédant 700 µm, et comprennent de fines poudres d'au plus 50 µm à une teneur d'au plus 15 % en masse, déterminée par le procédé de mesure défini dans JIS Z8901.

2. Plaque de diffusion de lumière selon la revendication 1, dans laquelle les fines particules de polymère (A) et le monomère polymérisable (B) sont inclus dans un rapport de combinaison se trouvant dans l'intervalle de 0,5:99,5 à 95:5 (rapport massique (A) : (B)).

3. Plaque de diffusion de lumière selon la revendication 1 ou 2, dans laquelle les fines particules de polymère (A) sont de fines particules de polymère à base de (méth)acrylate d'alkyle, ou de fines particules de polymère de polyorganosiloxane, et présentent une température de transition vitreuse de leur homopolymère d'au plus 0°C.

4. Plaque de diffusion de lumière selon l'une quelconque des revendications 1 à 3, dans laquelle le monomère polymérisable (B) est un type ou deux ou plusieurs types de monomères choisis parmi des monomères à base de (méth)acrylate d'alkyle, des monomères de base vinylique aromatique, des monomères à base de cyanure de vinyle, des monomères d'acétate de vinyle et des monomères de chlorure de vinyle.

5. Plaque de diffusion de lumière selon l'une quelconque des revendications 1 à 4, dans laquelle l'indice de réfraction des fines particules de polymère (A) se trouve dans l'intervalle de 1,350 à 1,650, l'indice de réfraction étant une valeur de l'indice de réfraction d'un rayon D déterminée selon le procédé de mesure défini dans JIS K7142 à 25°C.

6. Plaque de diffusion de lumière selon l'une quelconque des revendications 1 à 5, dans lequel la valeur absolue de la différence des indices de réfraction des fines particules de polymère (A) et de la résine de substrat (D) se trouve dans l'intervalle de 0,001 à 0,3, l'indice de réfraction étant une valeur de l'indice de réfraction d'un rayon D déterminé selon le procédé de mesure défini dans JIS K7142 à 25°C.
